# EUROPEAN PATENT APPLICATION

(11) **EP 4 780 103 A1**
(43) Date of publication of application: **22.07.2026**
(21) Application number: 24867272.7
(22) Date of filing: 30.08.2024
(51) Int. Cl.: H04W 72/0446, H04W 72/23, H04W 72/0453

(54) **COMMUNICATION METHOD AND APPARATUS**

(30) Priority: 19.09.2023 CN 202311216062
(71) Applicant: HUAWEI TECHNOLOGIES CO., LTD., Shenzhen 518129 (CN)
(72) Inventor: YANG, Liu, Shenzhen, Guangdong 518129 (CN); ZHANG, Xiaoyu, Shenzhen, Guangdong 518129 (CN); LIAO, Shuri, Shenzhen, Guangdong 518129 (CN); SHI, Meng, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2024/115896
(87) International publication number: WO 2025/060859

(57) **Abstract**

Embodiments of this application provide a communication method and apparatus. The method includes: A terminal device receives first information from a network device, where the first information indicates configuration information of a time-frequency resource, the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area. The terminal device performs interference measurement based on the configuration information of the time-frequency resource. According to the method, interference measurement can be effectively implemented, to resolve an interference problem in communication, and overheads of resources occupied during interference measurement can be reduced.

## Description

### CROSS-REFERENCE TO RELATED APPLICATIONS

This application claims priority to Chinese Patent Application No. 202311216062.1, filed with the China National Intellectual Property Administration on September 19, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With wide application and development of satellite communication, spectrum resources are rapidly occupied and are becoming increasingly scarce. To expand bandwidth, in the satellite communication, the attempts of co-construction and sharing of spectrum resources have begun explored. Such co-construction and sharing of spectrum resources can improve resource utilization and reduce construction costs, but also introduces co-channel/adjacent-channel interference in satellite-terrestrial links or high-earth and low-earth orbits.

Specifically, inter-system interference may be classified into downlink interference and uplink interference based on signal directions. Compared with downlink interference, uplink interference has more interference sources, stronger aggregate interference, and in single-satellite multi-beam scenarios, exhibits beam-level interferences (that is, received interference varies with beam directions). Therefore, how to effectively resolve the uplink interference is one of problems worthy of attention currently.

### SUMMARY

This application provides a communication method and apparatus, to effectively implement interference measurement, so as to resolve an interference problem in communication, and reduce overheads of resources occupied during interference measurement.

According to a first aspect, an embodiment of this application provides a communication method. The method may be performed by a terminal device, or may be performed by a chip or a chip system corresponding to the terminal device. This is not limited. The following uses the terminal device as an example. Specific steps of the method may include: The terminal device receives first information, where the first information indicates configuration information of a time-frequency resource, the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area. The terminal device performs interference measurement based on the configuration information of the time-frequency resource.

In this embodiment of this application, a network device may be an access network device (for example, a base station), and the terminal device is a terminal device served by the network device. For example, if the network device is a satellite base station, the terminal device is a terminal device served by the satellite base station, and may be referred to as a satellite terminal device for short. In the foregoing descriptions, the first information sent by the network device to the terminal device may be but is not limited to radio resource control RRC information.

In addition, both the first geographic coverage area and the second geographic coverage area are within a communication coverage range of the network device. The first geographic coverage area is greater than the second geographic coverage area, the first geographic coverage area may be an area covered by a wide beam transmitted by the network device, and the second geographic coverage area may be an area covered by a narrow beam transmitted by the network device. Therefore, in the foregoing descriptions, the first time-frequency resource may be considered to be used for interference measurement based on the wide beam, and the second time-frequency resource may be considered to be used for interference measurement based on the narrow beam.

In the solution of this application, the first information received by the terminal device indicates the configuration information of the time-frequency resource, the configuration information of the time-frequency resource includes the configuration information of the first time-frequency resource and the configuration information of the second time-frequency resource, the first time-frequency resource is used for the interference measurement for the first geographic coverage area, the second time-frequency resource is used for the interference measurement for the second geographic coverage area, and the second geographic coverage area is the part of the first geographic coverage area. In this case, the terminal device may flexibly cooperate, based on the configuration information of the time-frequency resource, with the network device to perform interference measurement, to effectively reduce overheads of resources occupied during interference measurement while ensuring that the interference measurement is implemented.

In a possible implementation, the configuration information of the first time-frequency resource indicates that the first time-frequency resource is periodically configured, and the configuration information of the second time-frequency resource indicates that the second time-frequency resource is semi-persistently configured. In this case, that the terminal device performs interference measurement based on the configuration information of the time-frequency resource includes: performing, on the first time-frequency resource, interference measurement for the first geographic coverage area based on a configuration periodicity of the first time-frequency resource; receiving MAC CE activation information, where the MAC CE activation information is used to activate the second time-frequency resource; and performing, on the second time-frequency resource, interference measurement for the second geographic coverage area.

In this implementation, the first time-frequency resource is periodically configured. In this way, a network device side can continuously track and determine the first geographic coverage area with strong interference. The second time-frequency resource is semi-persistently configured. In this way, the network device side can flexibly activate/deactivate the second time-frequency resource based on an interference measurement result of the first geographic coverage area, to perform interference measurement at a finer granularity for the second geographic coverage area. Therefore, the network device side can rapidly determine an area with strong interference, and overheads generated by beam sweeping for determining the interference area can be further reduced.

In a possible implementation, the method further includes: The terminal device receives MAC CE deactivation information, where the MAC CE deactivation information is used to deactivate the second time-frequency resource.

In this implementation, the second time-frequency resource is deactivated, so that the terminal device can normally communicate with the network device on the second time-frequency resource.

In a possible implementation, the configuration information of the first time-frequency resource indicates that the first time-frequency resource is periodically configured, and the configuration information of the second time-frequency resource indicates that the second time-frequency resource is aperiodically configured. In this case, that the terminal device performs interference measurement based on the configuration information of the time-frequency resource includes: performing, on the first time-frequency resource, interference measurement for the first geographic coverage area based on a configuration periodicity of the first time-frequency resource; receiving first downlink control information DCI, where the first downlink control information DCI indicates to activate the second time-frequency resource; and performing, on the second time-frequency resource, interference measurement for the second geographic coverage area.

In this implementation, the first time-frequency resource is periodically configured. In this way, a network device side can continuously track and determine the first geographic coverage area with strong interference. The second time-frequency resource is aperiodically configured. In this way, the network device side can flexibly activate the second time-frequency resource based on an interference measurement result of the first geographic coverage area, to perform interference measurement at a finer granularity for the second geographic coverage area. Therefore, the network device side can rapidly determine an area with strong interference, and overheads generated by beam sweeping for determining the interference area can be further reduced.

In a possible implementation, the configuration information of the first time-frequency resource indicates that the first time-frequency resource is semi-persistently configured, and the configuration information of the second time-frequency resource indicates that the second time-frequency resource is semi-persistently configured. In this case, that the terminal device performs interference measurement based on the configuration information of the time-frequency resource includes: receiving first MAC CE activation information, where the first MAC CE activation information is used to activate the first time-frequency resource; performing, on the first time-frequency resource, interference measurement for the first geographic coverage area; receiving first MAC CE deactivation information, where the first MAC CE deactivation information is used to deactivate the first time-frequency resource; receiving second MAC CE activation information, where the second MAC CE activation information is used to activate the second time-frequency resource; and performing, on the second time-frequency resource, interference measurement for the second geographic coverage area.

In this implementation, the first time-frequency resource is semi-persistently configured. In this way, a network device side can flexibly activate/deactivate the first time-frequency resource based on a time-varying characteristic or a measurement requirement of uplink interference, to perform interference measurement for the first geographic coverage area. The second time-frequency resource is also semi-persistently configured. In this way, the network device side can flexibly activate/deactivate the second time-frequency resource based on an interference measurement result of the first geographic coverage area, to perform interference measurement at a finer granularity for the second geographic coverage area. According to the method, the network device side can rapidly determine an area with strong interference, and overheads generated by beam sweeping for determining the interference area can be further reduced.

In a possible implementation, the method further includes: The terminal device receives second MAC CE deactivation information, where the second MAC CE deactivation information is used to deactivate the second time-frequency resource.

In this implementation, the second time-frequency resource is deactivated, so that the terminal device can normally communicate with the network device on the second time-frequency resource.

In a possible implementation, the configuration information of the first time-frequency resource indicates that the first time-frequency resource is semi-persistently configured, and the configuration information of the second time-frequency resource indicates that the second time-frequency resource is aperiodically configured. That the terminal device performs interference measurement based on the configuration information of the time-frequency resource includes: receiving MAC CE activation information, where the MAC CE activation information indicates to activate the first time-frequency resource;
performing, on the first time-frequency resource, interference measurement for the first geographic coverage area; receiving MAC CE deactivation information, where the MAC CE deactivation information indicates to deactivate the first time-frequency resource; receiving second downlink control information DCI, where the second downlink control information DCI indicates to activate the second time-frequency resource; and performing, on the second time-frequency resource, interference measurement for the second geographic coverage area.

In this implementation, the first time-frequency resource is semi-persistently configured. In this way, a network device side can flexibly activate/deactivate the first time-frequency resource based on a time-varying characteristic or a measurement requirement of uplink interference, to perform interference measurement for the first geographic coverage area. The second time-frequency resource is also aperiodically configured. In this way, the network device side can flexibly activate the second time-frequency resource based on an interference measurement result of the first geographic coverage area, to perform interference measurement at a finer granularity for the second geographic coverage area. According to the method, the network device side can rapidly determine an area with strong interference, and overheads generated by beam sweeping for determining the interference area can be further reduced.

In a possible implementation, the configuration information of the time-frequency resource indicates that the time-frequency resource is periodically configured. That the terminal device performs interference measurement based on the configuration information of the time-frequency resource includes: performing, on the time-frequency resource, interference measurement for the first geographic coverage area and interference measurement for the second geographic coverage area based on a periodicity of the time-frequency resource.

In this implementation, the time-frequency resource used for the interference measurement is periodically configured. In this way, a network device side can use, based on the configuration periodicity of the time-frequency resource, the time-frequency resource to perform interference measurement for the first geographic coverage area and the second geographic coverage area. In addition, the time-frequency resource is not fixedly used for interference measurement for a specific geographic coverage area. Instead, the network device side flexibly uses the time-frequency resource for the interference measurement for the foregoing two geographic coverage areas based on an interference measurement requirement, so that an area with strong interference can be effectively determined, and signaling overheads can be effectively reduced.

In a possible implementation, the configuration information of the time-frequency resource indicates that the time-frequency resource is semi-persistently configured. That the terminal device performs interference measurement based on the configuration information of the time-frequency resource includes: receiving MAC CE activation information, where the MAC CE activation information is used to activate the time-frequency resource; and performing, on the time-frequency resource, interference measurement for the first geographic coverage area and interference measurement for the second geographic coverage area.

In this implementation, the time-frequency resource used for the interference measurement is semi-persistently configured. In this way, a network device side can flexibly activate/deactivate the time-frequency resource based on a time-varying characteristic or a measurement requirement of uplink interference, to perform interference measurement for the first geographic coverage area and the second geographic coverage area. In addition, the time-frequency resource is not fixedly used for interference measurement for a specific geographic coverage area. Instead, the network device side flexibly uses the time-frequency resource for the interference measurement for the foregoing two geographic coverage areas based on an interference measurement requirement, so that an area with strong interference can be effectively determined, and signaling overheads can be effectively reduced.

In a possible implementation, the method further includes: The terminal device receives MAC CE deactivation information, where the MAC CE deactivation information is used to deactivate the time-frequency resource.

According to a second aspect, an embodiment of this application provides a communication method. The method may be performed by a network device, or may be performed by a chip or a chip system corresponding to the network device. This is not limited. The following uses the network device as an example. The method may specifically include: The network device generates configuration information of a time-frequency resource, where the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area. The network device sends first information, where the first information indicates the configuration information of the time-frequency resource. The network device performs interference measurement based on the configuration information of the time-frequency resource.

In this embodiment of this application, the network device may be an access network device (for example, a base station), and a terminal device is a terminal device served by the network device. For example, if the network device is a satellite base station, the terminal device is a terminal device served by the satellite base station, and may be referred to as a satellite terminal device for short. In the foregoing descriptions, the first information sent by the network device to the terminal device may be but is not limited to radio resource control RRC information.

In addition, both the first geographic coverage area and the second geographic coverage area are within a communication coverage range of the network device. The first geographic coverage area is greater than the second geographic coverage area, the first geographic coverage area may be an area covered by a wide beam transmitted by the network device, and the second geographic coverage area may be an area covered by a narrow beam transmitted by the network device. Therefore, in the foregoing descriptions, the first time-frequency resource may be considered to be used for interference measurement based on the wide beam, and the second time-frequency resource may be considered to be used for interference measurement based on the narrow beam.

In the solution of this application, the first information sent by the network device indicates the configuration information of the time-frequency resource, the configuration information of the time-frequency resource includes the configuration information of the first time-frequency resource and the configuration information of the second time-frequency resource, the first time-frequency resource is used for the interference measurement for the first geographic coverage area, the second time-frequency resource is used for the interference measurement for the second geographic coverage area, and the second geographic coverage area is the part of the first geographic coverage area. In this case, the network device may flexibly perform interference measurement based on the configuration information of the time-frequency resource, to effectively reduce overheads of resources occupied during interference measurement while ensuring that the interference measurement is implemented.

In a possible implementation, the configuration information of the first time-frequency resource indicates that the first time-frequency resource is periodically configured, and the configuration information of the second time-frequency resource indicates that the second time-frequency resource is semi-persistently configured. That the network device performs interference measurement based on the configuration information of the time-frequency resource includes: performing, on the first time-frequency resource, interference measurement for the first geographic coverage area based on a configuration periodicity of the first time-frequency resource; sending MAC CE activation information after completing the interference measurement for the first geographic coverage area, where the MAC CE activation information is used to activate the second time-frequency resource; performing, on the second time-frequency resource, interference measurement for the second geographic coverage area; and sending MAC CE deactivation information after completing the interference measurement for the second geographic coverage area, where the MAC CE deactivation information is used to deactivate the second time-frequency resource.

In this implementation, the first time-frequency resource is periodically configured, and a network device side may continuously track and determine the first geographic coverage area with strong interference. The second time-frequency resource is semi-persistently configured, and the network device side may flexibly activate/deactivate the second time-frequency resource based on an interference measurement result of the first geographic coverage area, to perform interference measurement at a finer granularity for the second geographic coverage area. Therefore, the network device side can rapidly determine an area with strong interference, and overheads generated by beam sweeping for determining the interference area can be further reduced.

In a possible implementation, the configuration information of the first time-frequency resource indicates that the first time-frequency resource is periodically configured, and the configuration information of the second time-frequency resource indicates that the second time-frequency resource is aperiodically configured. That the terminal device performs interference measurement based on the configuration information of the time-frequency resource includes: performing, on the first time-frequency resource, interference measurement for the first geographic coverage area based on a configuration periodicity of the first time-frequency resource; sending first downlink control information DCI after completing the interference measurement for the first geographic coverage area, where the first downlink control information DCI indicates to activate the second time-frequency resource; and performing, on the second time-frequency resource, interference measurement for the second geographic coverage area.

In this implementation, the first time-frequency resource is periodically configured, and a network device side may continuously track and determine the first geographic coverage area with strong interference. The second time-frequency resource is aperiodically configured, and the network device side may flexibly activate the second time-frequency resource based on an interference measurement result of the first geographic coverage area, to perform interference measurement at a finer granularity for the second geographic coverage area. Therefore, the network device side can rapidly determine an area with strong interference, and overheads generated by beam sweeping for determining the interference area can be further reduced.

In a possible implementation, the configuration information of the first time-frequency resource indicates that the first time-frequency resource is semi-persistently configured, and the configuration information of the second time-frequency resource indicates that the second time-frequency resource is semi-persistently configured. That the network device performs interference measurement based on the configuration information of the time-frequency resource includes: sending first MAC CE activation information, where the first MAC CE activation information is used to activate the first time-frequency resource; performing, on the first time-frequency resource, interference measurement for the first geographic coverage area; sending first MAC CE deactivation information after completing the interference measurement for the first geographic coverage area, where the first MAC CE deactivation information is used to deactivate the first time-frequency resource;
sending second MAC CE activation information, where the second MAC CE activation information is used to activate the second time-frequency resource; performing, on the second time-frequency resource, interference measurement for the second geographic coverage area; and sending second MAC CE deactivation information after completing the interference measurement for the second geographic coverage area, where the second MAC CE deactivation information is used to deactivate the second time-frequency resource.

In this implementation, the first time-frequency resource is semi-persistently configured, and a network device side may flexibly activate/deactivate the first time-frequency resource based on a time-varying characteristic or a measurement requirement of uplink interference, to perform interference measurement for the first geographic coverage area. The second time-frequency resource is also semi-persistently configured, and the network device side may flexibly activate/deactivate the second time-frequency resource based on an interference measurement result of the first geographic coverage area, to perform interference measurement at a finer granularity for the second geographic coverage area. According to the method, the network device side can rapidly determine an area with strong interference, and overheads generated by beam sweeping for determining the interference area can be further reduced.

In a possible implementation, the configuration information of the first time-frequency resource indicates that the first time-frequency resource is semi-persistently configured, and the configuration information of the second time-frequency resource indicates that the second time-frequency resource is aperiodically configured. That the network device performs interference measurement based on the configuration information of the time-frequency resource includes: sending MAC CE activation information, where the MAC CE activation information indicates to activate the first time-frequency resource;
performing, on the first time-frequency resource, interference measurement for the first geographic coverage area; sending MAC CE deactivation information after completing the interference measurement for the first geographic coverage area, where the MAC CE deactivation information indicates to deactivate the first time-frequency resource; sending second downlink control information DCI, where the second downlink control information DCI indicates to activate the second time-frequency resource; and performing, on the second time-frequency resource, interference measurement for the second geographic coverage area.

In this implementation, the first time-frequency resource is semi-persistently configured, and a network device side may flexibly activate/deactivate the first time-frequency resource based on a time-varying characteristic or a measurement requirement of uplink interference, to perform interference measurement for the first geographic coverage area. The second time-frequency resource is aperiodically configured, and the network device side may flexibly activate the second time-frequency resource based on an interference measurement result of the first geographic coverage area, to perform interference measurement at a finer granularity for the second geographic coverage area. According to the method, the network device side can rapidly determine an area with strong interference, and overheads generated by beam sweeping for determining the interference area can be further reduced.

In a possible implementation, the configuration information of the time-frequency resource indicates that the time-frequency resource is periodically configured. That the network device performs interference measurement based on the configuration information of the time-frequency resource includes: performing interference measurement for the first geographic coverage area based on a configuration periodicity of the time-frequency resource; and performing interference measurement for the second geographic coverage area after completing the interference measurement for the first geographic coverage area.

In this implementation, the time-frequency resource used for the interference measurement is periodically configured, and a network device side may use, based on the configuration periodicity of the time-frequency resource, the time-frequency resource to perform interference measurement for the first geographic coverage area and the second geographic coverage area. In addition, the time-frequency resource is not fixedly used for interference measurement for a specific geographic coverage area. Instead, the network device side flexibly uses the time-frequency resource for the interference measurement for the foregoing two geographic coverage areas based on an interference measurement requirement, so that an area with strong interference can be effectively determined, and signaling overheads can be effectively reduced.

In a possible implementation, the configuration information of the time-frequency resource indicates that the time-frequency resource is semi-persistently configured. That the network device performs interference measurement based on the configuration information of the time-frequency resource includes: sending MAC CE activation information, where the MAC CE activation information is used to activate the time-frequency resource; performing, on the time-frequency resource, interference measurement for the first geographic coverage area; performing interference measurement for the second geographic coverage area after completing the interference measurement for the first geographic coverage area; and sending MAC CE deactivation information after completing the interference measurement for the second geographic coverage area, where the MAC CE deactivation information is used to deactivate the time-frequency resource.

In this implementation, the time-frequency resource used for the interference measurement is semi-persistently configured, and a network device side may flexibly activate/deactivate the time-frequency resource based on a time-varying characteristic or a measurement requirement of uplink interference, to perform interference measurement for the first geographic coverage area and the second geographic coverage area. In addition, the time-frequency resource is not fixedly used for interference measurement for a specific geographic coverage area. Instead, the network device side flexibly uses the time-frequency resource for the interference measurement for the foregoing two geographic coverage areas based on an interference measurement requirement, so that an area with strong interference can be effectively determined, and signaling overheads can be effectively reduced.

In a possible implementation, that the network device performs interference measurement for the first geographic coverage area may include: transmitting at least one wide beam, and receiving an uplink signal by using the at least one wide beam, where each wide beam corresponds to one first geographic coverage area, and a first geographic coverage area corresponding to the at least one wide beam lies within a terrestrial area covered by the network device and does not overlap with each other; collecting statistics on uplink signal power corresponding to each wide beam; and using, as a first interference area, a first geographic coverage area corresponding to a wide beam for which uplink signal power reaches a preset first threshold.

In this implementation, a large geographic coverage area with strong interference can be effectively determined.

In a possible implementation, that the network device performs interference measurement for the second geographic coverage area may include: transmitting at least one narrow beam to the first interference area, and receiving an uplink signal by using the at least one narrow beam, where each narrow beam corresponds to one second geographic coverage area, and a second geographic coverage area corresponding to the at least one narrow beam does not encounter overlapping; collecting statistics on uplink signal power corresponding to each narrow beam; and using, as a target interference area, a second geographic coverage area corresponding to a narrow beam for which uplink signal power reaches a preset second threshold.

In this implementation, a geographic coverage area with strong interference may be determined at a finer granularity from the large geographic coverage area with strong interference.

According to a third aspect, an embodiment of this application further provides a communication apparatus. The apparatus may be configured to perform the method in the first aspect. The apparatus may be a terminal device, or the apparatus may be a component (for example, a chip, a chip system, or a circuit) in the terminal device, or may be an apparatus that can be used in matching with the terminal device.

In a possible implementation, the apparatus may include modules or units that one to one correspond to the method/operations/steps/actions described in the first aspect. The modules or the units may be hardware circuits, software, or may be implemented by the hardware circuits in combination with the software. In a possible implementation, the apparatus may include a processing unit (which may also be referred to as a processing module) and a communication unit (which may also be referred to as a communication module). The communication unit may be configured to perform a receiving function and/or a sending function. The processing unit may be configured to perform the method according to any one of the first aspect or the possible implementations of the first aspect.

According to a fourth aspect, an embodiment of this application further provides a communication apparatus. The apparatus may be configured to perform the method in the second aspect. The apparatus may be a network device, or the apparatus may be a component (for example, a chip, a chip system, or a circuit) in the network device, or may be an apparatus that can be used in matching with the network device.

In a possible implementation, the apparatus may include modules or units that one to one correspond to the method/operations/steps/actions described in the second aspect. The modules or the units may be hardware circuits, software, or may be implemented by the hardware circuits in combination with the software. In a possible implementation, the apparatus may include a processing unit (which may also be referred to as a processing module) and a communication unit (which may also be referred to as a communication module). The communication unit may be configured to perform a receiving function and/or a sending function. The processing unit may be configured to perform the method according to any one of the second aspect or the possible implementations of the second aspect.

According to a fifth aspect, an embodiment of this application provides an apparatus. The apparatus includes at least one processor and a communication interface. The communication interface is configured to communicate with another apparatus. The processor is configured to run a group of programs, to enable the apparatus to implement the method provided in any one of the first aspect or the possible implementations of the first aspect, or enable the apparatus to implement the method provided in any one of the second aspect or the possible implementations of the second aspect.

According to a sixth aspect, an embodiment of this application further provides a computer storage medium. The storage medium stores a software program. When the software program is read and executed by one or more processors, the method provided in any one of the first aspect or the possible implementations of the first aspect may be implemented, or the method provided in any one of the second aspect or the possible implementations of the second aspect may be implemented.

According to a seventh aspect, an embodiment of this application further provides a computer program product including instructions. When the computer program product runs on a computer, the method provided in any one of the first aspect or the possible implementations of the first aspect is performed, or the method provided in any one of the second aspect or the possible implementations of the second aspect is performed, or the method provided in any one of the third aspect or the possible implementations of the third aspect is performed.

According to an eighth aspect, an embodiment of this application provides a communication system, including a terminal device that can implement the method provided in the first aspect, and a network device that can implement the method provided in the second aspect.

According to a ninth aspect, an embodiment of this application further provides a chip system. The chip system includes a processor, configured to support a terminal device in implementing functions in the first aspect, or configured to support a network device in implementing functions in the second aspect.

In a possible design, the chip system further includes a storage. The storage is configured to store and load necessary program instructions and data that are executed by an apparatus. The chip system may include a chip, or may include a chip and another discrete device.

It should be noted that for technical effects that can be achieved in any one of the third aspect to the ninth aspect or the possible implementations of the third aspect to the ninth aspect, refer to descriptions of technical effects that can be achieved in any one of the first aspect and the second aspect or the possible implementations of the first aspect and the second aspect. Details are not described herein again.

### BRIEF DESCRIPTION OF DRAWINGS

FIG. 1 is a diagram of a typical scenario in which an NTN network provides user equipment access according to this application;
FIG. 2 is a diagram of another typical scenario in which an NTN network provides user equipment access according to this application;
FIG. 3 is a diagram of downlink interference according to this application;
FIG. 4 is a diagram of uplink interference according to this application;
FIG. 5 is a diagram of an interference scenario between an LEO satellite and terrestrial cellular according to this application;
FIG. 6 is a diagram of an interference scenario between a low-earth orbit satellite and a high-earth orbit satellite according to this application;
FIG. 7 is a diagram of a frame structure according to this application;
FIG. 8 is a diagram of an architecture of a mobile communication system to which an embodiment of this application is applied;
FIG. 9 is a schematic flowchart of a communication method according to an embodiment of this application;
FIG. 10 is a diagram of measurement for determining an interference area according to an embodiment of this application;
FIG. 11A is a diagram of a configuration manner 1 according to an embodiment of this application;
FIG. 11B is a diagram of a configuration manner 2 according to an embodiment of this application;
FIG. 12A is a diagram of a configuration manner 3 according to an embodiment of this application;
FIG. 12B is a diagram of a configuration manner 4 according to an embodiment of this application;
FIG. 13A is a diagram of a configuration manner 5 according to an embodiment of this application;
FIG. 13B is a diagram of a configuration manner 6 according to an embodiment of this application;
FIG. 14 is a diagram of a structure of a communication apparatus according to an embodiment of this application;
FIG. 15 is a diagram of a structure of another communication device according to an embodiment of this application; and
FIG. 16 is a diagram of a structure of a chip according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a", "the", and "this" of singular expression forms used in the specification and the appended claims of this application are also intended to include expression forms such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. The terms "include", "have", and variants thereof in this application all mean "including but not limited to", unless otherwise specifically emphasized in another manner. The term like "example" or "for example" is used to represent an example, an illustration, or a description. Any embodiment or design scheme described with "example" or "for example" should not be explained as being more preferred or having more advantages than another embodiment or design scheme. The term like "example" or "for example" is used to present a related concept in a specific manner for ease of understanding.

"A plurality of" in embodiments of this application means "greater than or equal to two". It should be noted that in the descriptions of embodiments of this application, the terms such as "first" and "second" are merely intended for distinction in description, but should not be understood as indicating or implying relative importance or indicating or implying a sequence. In addition, the term "indicating" mentioned in the descriptions of embodiments of this application may include directly indicating and indirectly indicating. When a piece of indication information is described as indicating A, the indication information may directly indicate A or indirectly indicate A, but it does not indicate that the indication information definitely carries A.

To better understand the solutions provided in embodiments of this application, the following first explains terms (words), concepts, and procedures in embodiments of this application. It should be noted that these explanations are intended to make embodiments of this application easier to understand, but should not be considered as a limitation on the protection scope claimed in this application.

### I. NTN

The NTN means a network that uses radio frequency resources on a satellite (or an unmanned aircraft system (unmanned aircraft system, UAS) platform or a high altitude platform station (high altitude platform station, HAPS) platform). Compared with a terrestrial cellular network (for example, a 5th generation mobile communication technology (5th generation mobile communication technology, 5G)), the NTN network features wide coverage, low latency, broadband, and low costs. As a supplement and extension of the terrestrial cellular network, the NTN network can implement wide-area seamless coverage that cannot be implemented by wired telephone networks and terrestrial mobile communication networks, to effectively resolve an internet access problem in areas with insufficient communication infrastructure. A large quantity of satellites are deployed in a near-earth orbit, and a round-trip transmission latency of data between the satellite and a terrestrial terminal device is greatly reduced to a low latency at a level of dozens of milliseconds. Using technologies such as high band, multi-spot beam, and frequency multiplexing significantly improves a communication capability of the satellite, reduces broadband costs per unit, and can meet requirements of high information rate services. Compared with communication infrastructure such as a terrestrial cellular base station and a submarine optical fiber/cable, the NTN has a significant cost advantage. Modern small satellites have low research, development, and manufacturing costs, and software-defined technologies can further prolong service lives of in-orbit satellites. The NTN network may be used in scenarios such as global coverage (such as remote areas and ocean-going ships), emergency relief (such as disaster monitoring and emergency communication), connectivity of everything, and high-speed movement (such as high-speed railways and airplanes).

The 3rd generation partnership project (3rd generation partnership project, 3GPP) has started research on satellite-terrestrial integration since R14. TS 22.261 discusses roles and advantages of the satellites in a 5G system, and specifies, for the first time, that 5G supports satellite access. R15 forms the first 5G and satellite integration technical report TR 38.811, defines eight eMBB scenarios and two massive machine-type communication (massive machine-type communication, mMTC) scenarios, and defines an NTN channel model. R16 further researches an architecture and a solution for NR to support the NTN in TR 38.821. Based on research outcomes of R16, R17 initiates the standardization of 5G new radio to support the NTN, and forms the first version of integration technical specifications. R18 continues NTN enhancement research.

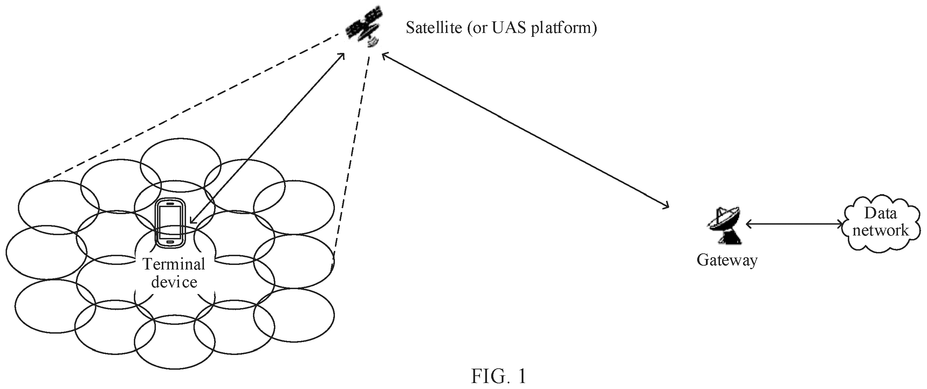

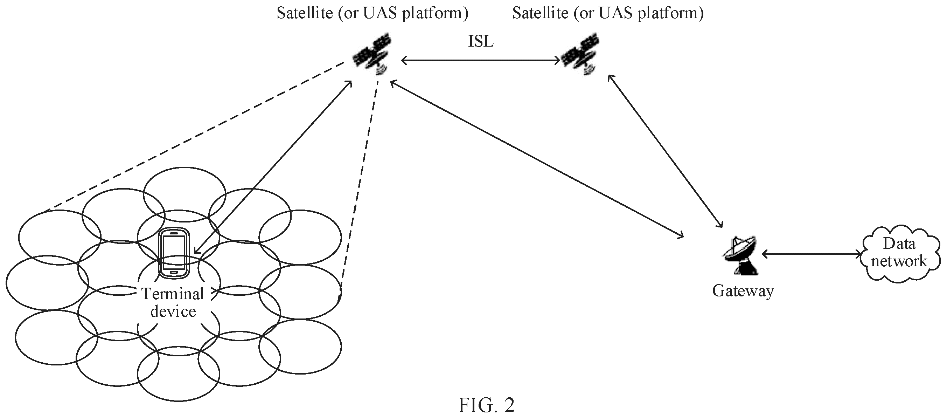

Typical scenarios in which the NTN network provides user equipment access include a transparent payload (transparent payload) and a regenerative payload (regenerative payload). In a transparent payload scenario, there is no processing such as baseband demodulation or decoding on a satellite. Therefore, a signal waveform remains unchanged and is repeated, as shown in FIG. 1. In a regenerative payload scenario, a satellite (or a UAS platform) has all or some base station functions (for example, a gNB), as shown in FIG. 2. It should be noted that FIG. 1 and FIG. 2 are merely examples of NTN scenarios, and the NTN scenarios may further include another specific scenario. This is not limited in this application.

The NTN network typically has the following elements:
1. There are one or more gateways (gateways) connecting the NTN network and a public data network.
2. There is a feeder link, which is a radio link between the gateway and a satellite (or a UAS platform).
3. There is a service link, which is a radio link between a terminal device and the satellite (or the UAS platform).
4. There is the satellite (or the UAS platform), which can implement a transparent payload and a regenerative payload.
5. Whether a satellite constellation has an inter-satellite link (inter-satellite link, ISL) is optional. If there is an inter-satellite link, the satellite is a regenerative payload. The ISL may operate at a radio frequency (radio frequency, RF) frequency or an optical band.
6. The terminal device is served by a satellite (or a UAS platform) in a target service area.

### II. Beam

Beam: The beam is a communication resource, and the beam may be a wide beam, a narrow beam, or another type of beam.

The wide beam is a form of wavefront broadening when electromagnetic wave transmission is performed in space. To implement wide-beam communication, a wide-beam antenna needs to be used. The wide beam features a large beam angle, a wide coverage range, and a short transmission distance, and is suitable for signal transmission in a wide direction. However, the wide beam has weak signal strength, is prone to interference and attenuation, has a low transmission rate, and is not suitable for high-speed data transmission and high-density user scenarios.

The narrow beam is a form of wavefront concentration when electromagnetic wave transmission is performed in space. To implement narrow-beam communication, a narrow-beam antenna needs to be used. The narrow beam features a small beam angle, a narrow coverage range, and a long transmission distance. Due to strong signal strength and a high transmission rate, the narrow beam is suitable for high-speed data transmission and high-density user scenarios.

A technology for forming the beam may be beamforming or another technical means. The beamforming technology may be specifically digital beamforming, analog beamforming, hybrid digital/analog beamforming, or the like. Different beams may be considered as different communication resources, and same information or different information may be sent by using different beams. Optionally, a plurality of beams having a same communication feature or similar communication features may be considered as one beam, and the beam may include one or more antenna ports for transmission of a data channel, a control channel, a detection signal, and the like. For example, a transmit beam may be signal strength distribution formed in different directions in space after a signal is transmitted by an antenna, and a receive beam may be signal strength distribution in different directions in space of a signal received from the antenna. It may be understood that one or more antenna ports forming one beam may also be considered as one antenna port set, the beam may also be referred to as a spatial filter (spatial filter), the transmit beam may also be referred to as a spatial transmit filter, and the receive beam may also be referred to as a spatial receive filter.

In addition, in embodiments of this application, a signal is received or sent between a terminal and a network device by using a beam. Specifically, beams may be classified into a receive beam and a transmit beam based on a direction for receiving or sending a signal. The receive beam is used to receive a signal, and the transmit beam is used to send a signal. For example, the network device sends a downlink signal by using the transmit beam, and the terminal device receives the downlink signal by using the receive beam. For another example, the terminal device sends an uplink signal by using the transmit beam, and the network device receives the uplink signal by using the receive beam. The transmit beam used by the terminal device and the receive beam used by the network device form a beam pair, and the receive beam used by the terminal device and the transmit beam used by the network device also form a beam pair.

It should be noted that for the terminal device, the receive beam may also be referred to as a downlink beam, and the transmit beam may also be referred to as an uplink beam. The receive beam used by the terminal device to receive the downlink signal may also be referred to as a downlink operating beam, and the transmit beam used by the terminal device to send the uplink signal may also be referred to as an uplink operating beam. When the terminal device supports a beam reciprocity capability, the terminal device may determine the uplink operating beam based on the downlink operating beam, or determine the downlink operating beam based on the uplink operating beam.

### III. Satellite spectrum

Satellite communication operates in microwave bands with a frequency range of 1 GHz to 40 GHz. The bands may be divided into L, S, C, X, Ku, K, and Ka. Different bands correspond to different purposes. The K band is not suitable for satellite communication because the K band is in a frequency window that is heavily affected by an atmospheric absorption loss. Therefore, common satellite communication bands are L, S, C, X, Ku, and Ka.

The L and S bands are used for satellite mobile communication, that is, a common handheld satellite phone. The C band has a relatively low frequency. Therefore, the C band has large signal coverage, is slightly affected by weather, and is usually used for private network communication and international private lines of government and enterprise organizations and the like, content distribution of television stations, and the like. The X band is a regulated band, is usually used by the government and military departments, and cannot be used for civil and commercial purposes. The Ku band has a relatively high frequency, and is easily affected by an antenna, causing signal fluctuation. However, signal strength of the Ku band is higher than that of the C band. Therefore, an aperture of a terrestrial receive antenna is much smaller, usually with a diameter as small as 0.35 meters. The Ku band is suitable for direct-to-home satellite television broadcasting. The Ka band emerges and is put into use in recent years. Because the C and Ku bands are approaching saturation and cannot carry more services, the Ka band with a higher frequency starts to be searched for.

A higher band indicates more bandwidth resources and a larger service capacity that can be supported. In recent years, with a surge in satellite internet access requirements, people start to focus on the Ka band with the higher frequency. Although the Ka band is more easily affected by weather than the Ku band, the Ka band has larger operating bandwidth, higher signal strength, and a smaller antenna aperture, and is more valuable for development. The common satellite communication bands and main purposes are shown in Table 1.

**Table 1**

| Band | Range | Purpose |
|---|---|---|
| L | 1 GHz to 2 GHz | Primarily used for satellite mobile communication, satellite radio determination, and satellite measurement and control links, and the like |
| S | 2 GHz to 4 GHz | |
| C | 4 GHz to 7 GHz | Primarily used for fixed satellite service communication; nearly saturated |
| X | 7 GHz to 12 GHz | Primarily used for fixed satellite service communication, and typically allocated to government and military users |
| Ku | 12 GHz to 18 GHz | Primarily used for fixed satellite service communication; nearly saturated |
| Ka | 27 GHz to 40 GHz | Currently being heavily applied for use |

For frequency range (frequency range, FR) 1, frequency ranges and band (band) numbers for the NTN are shown in Table 2.

**Table 2: 3GPP NTN band (FR1)**

| Satellite operating band (satellite operating band) | Uplink operating band (uplink operating band) | Downlink operating band (downlink operating band) | Duplex mode (duplex mode) |
|---|---|---|---|
| n256 | 1980 MHz to 2010 MHz | 2170 MHz to 2200 MHz | FDD |
| n255 | 1626.5 MHz to 1660.5 MHz | 1525 MHz to 1559 MHz | FDD |

For bands above 10 GHz, frequency ranges and band numbers for the NTN are shown in Table 3.

**Table 3: 3GPP NTN band (FR2)**

| NTN operating band (operating band) | UL | DL |
|---|---|---|
| n512 | 27.5 GHz to 30.0 GHz | 17.3 GHz to 20.2 GHz |
| n511 | 28.35 GHz to 30.0 GHz | 17.3 GHz to 20.2 GHz |
| n510 | 27.5 GHz to 28.35 GHz | 17.3 GHz to 20.2 GHz |

### IV. Inter-system interference

Co-constructing and sharing spectrums can improve resource utilization and reduce construction costs, but causes inter-system interference, for example, co-channel/adjacent-channel interference between a satellite and the ground/a high-earth orbit and a low-earth orbit. Usually, the inter-system interference may be classified into downlink interference and uplink interference based on a signal direction.

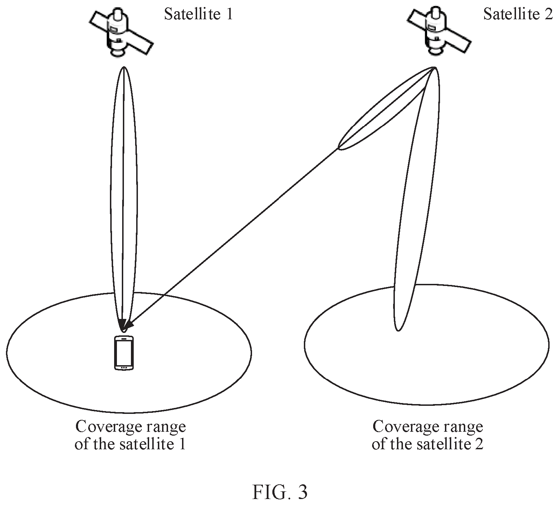

The downlink interference has the following features:
1. Few interference sources: For example, a low-earth orbit satellite interferes with a terrestrial terminal device. As shown in FIG. 3, a main interference source is a satellite 1 that covers the terminal device, and interference from a satellite 2 to the terminal device is mainly from a side lobe, has a larger path loss, and has a lower interference level.
2. Strong interference: is caused because a terrestrial base station/low-earth orbit satellite is closer to the terminal device.

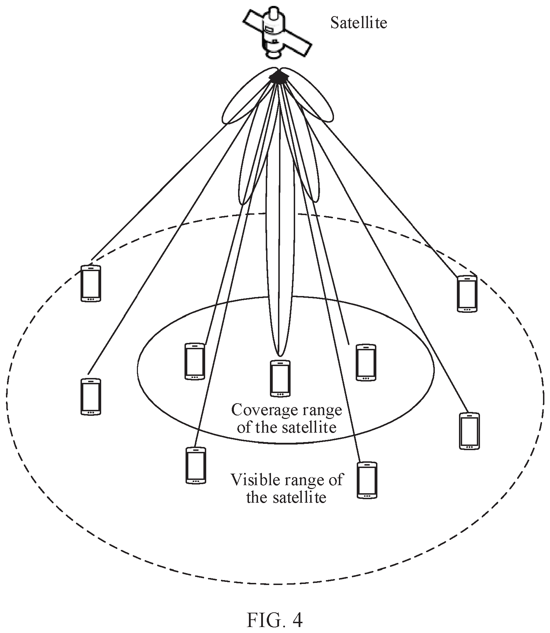

The uplink interference has the following features:
1. Numerous interference sources: For example, a terrestrial terminal device interferes with a low-earth orbit satellite. As shown in FIG. 4, interference sources are all terrestrial terminal devices within a visible range of the satellite.
2. Strong aggregate interference: Main interference sources are terminal devices near a main lobe of a satellite beam. In this case, a satellite reception gain is large.
3. Beam level: In a single-satellite multi-beam scenario, interference to a satellite varies with a beam direction.
4. Frequency selective characteristic: An interference signal has different interference characteristics on different bands.
5. Time-varying characteristic: An interference signal has different interference characteristics at different moments.

The inter-system interference may be classified into interference between a satellite and the ground and interference between a high-earth orbit and a low-earth orbit based on an interference scenario.

### (1) Interference between a satellite and the ground

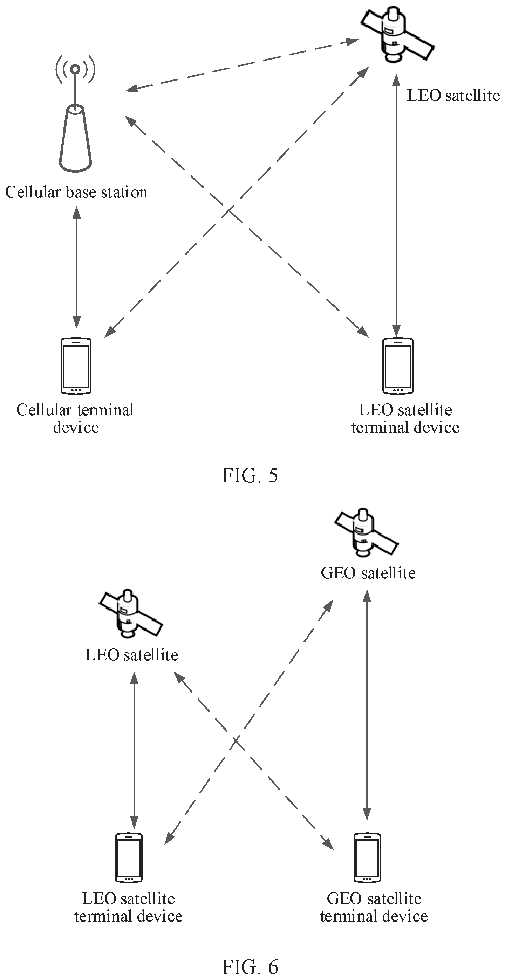

Because there are a large quantity of base stations and terminal devices in a terrestrial cellular network, and an LEO satellite is close to the ground, a path loss is smaller, and interference is easily generated between the LEO satellite and the terrestrial cellular network. An interference scenario between the LEO satellite and the terrestrial cellular is shown in FIG. 5, where a solid line segment represents a valid signal, a dashed line segment represents an interference signal, and an arrow represents a signal direction.

As shown in Table 4, interference may be classified into the following six types.

**Table 4: Classification of satellite-terrestrial interference**

| Interfered party | Interfering party | Interference source |
|---|---|---|
| Cellular base station | LEO satellite | Satellite power leakage (base station antenna uptilt) |
| | LEO satellite terminal | Terminal power leakage |
| Cellular terminal | LEO satellite | Satellite power leakage |
| LEO satellite | Cellular base station | Base station power leakage (base station antenna uptilt) |
| | Cellular terminal | Terminal power leakage |
| LEO satellite terminal | Cellular base station | Base station power leakage |

### (2) Interference between a high-earth orbit and a low-earth orbit

A coverage area of a high-earth orbit satellite is large, and a coverage range of a low-earth orbit satellite overlaps a coverage range of the high-earth orbit satellite. Because a path loss of the low-earth orbit satellite is smaller, interference is easily generated between the high-earth orbit satellite and the low-earth orbit satellite. An interference scenario between the low-earth orbit satellite and the high-earth orbit satellite is shown in FIG. 6, where a solid line segment represents a valid signal, a dashed line segment represents an interference signal, and an arrow represents a signal direction.

As shown in Table 5, interference may be classified into the following four types.

**Table 5: Classification of high-earth and low-earth orbit interference**

| Interfered party | Interfering party | Interference source |
|---|---|---|
| LEO satellite | GEO satellite terminal | Terminal power leakage |
| GEO satellite | LEO satellite terminal | Terminal power leakage |
| LEO satellite terminal | GEO satellite | Satellite power leakage |
| GEO satellite terminal | LEO satellite | Satellite power leakage |

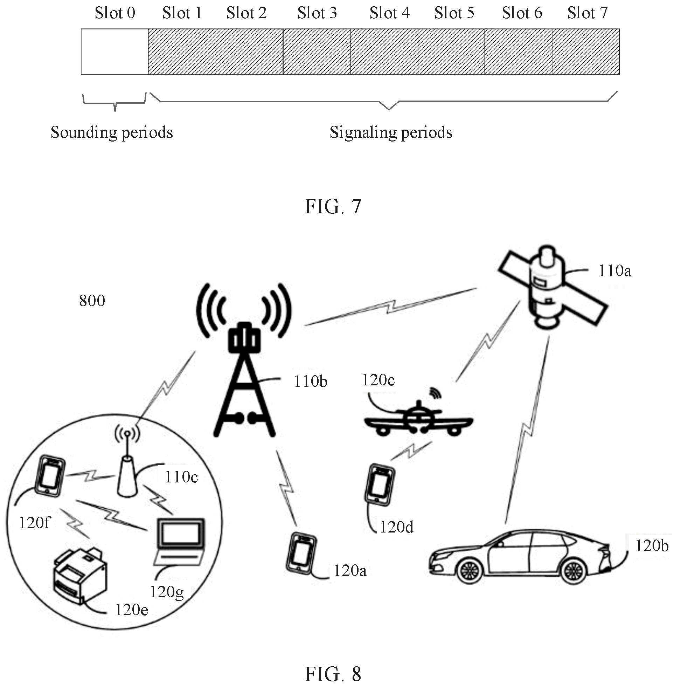

To measure the uplink interference, a method for filtering out an interference signal is proposed currently. The method consists of two phases: sounding periods (Sounding periods) and signaling periods (Signaling periods). In the sounding periods, a satellite terminal does not send signals, and a satellite base station receives interference signals to form sounding base signals. In the signaling periods, the satellite base station receives signals and filters out interference signals to form valid signals. A GSM frame structure is used as an example. As shown in FIG. 7, a slot 0 is a sounding period in which uplink interference is measured, and a slot 1 to a slot 7 are sounding periods in which the satellite base station receives signals sent by the satellite terminal, and filters out interference signals to obtain valid signals. The slot 0 occupies all frequency domain resources in this period of time, resulting in a severe waste of resources. Assuming that all frequency domain resources in the slot 1 to the slot 7 are used for data scheduling, causing a waste of 1/8 time-frequency domain resources, approximately 12.5%.

For the foregoing problem, embodiments of this application provide a communication method. The method can effectively resolve the problem of a waste of time-frequency resources caused by measurement of uplink interference.

The technical solutions in embodiments of this application may be applied to various communication systems, for example, a long term evolution (long term evolution, LTE) system, a 5G system or a new radio (new radio, NR) system, a non-terrestrial network (non-terrestrial network, NTN), and a future communication system like a 6th generation mobile communication system. This is not limited in this application.

FIG. 8 shows a possible and non-limiting communication system architecture to which an embodiment of this application is applicable. As shown in FIG. 8, the communication system 800 may include at least one access network device (for example, 110a, 110b, and 110c in FIG. 8), and may further include at least one terminal device (for example, 120a to 120g in FIG. 8). Access network devices may be connected to each other in a wired or wireless manner. FIG. 8 is merely a diagram. The communication system may further include another communication device, for example, may further include a wireless relay device and a wireless backhaul device.

A network device provided in embodiments of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 8), or may be a macro base station (for example, 110b in FIG. 8), or may be a micro base station or an indoor base station (for example, 110c in FIG. 8), or may be a relay node, a donor node, or the like. A specific communication technology and a specific device form that are used for the network device are not limited in this application. For ease of description, the following uses the network device as an example for description.

It should be noted that in different systems, the CU (or the CU-CP and the CU-UP) or the DU may have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and an RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of the software module and the hardware module.

The terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenarios include but are not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, a smart city, or the like. The terminal device may be a mobile phone (for example, mobile phones 120a, 120d, and 120f in FIG. 8), a tablet computer, a computer (for example, a computer 120g in FIG. 8) having a wireless transceiver function, a wearable device, a vehicle (for example, 120b in FIG. 8), an uncrewed aerial vehicle, a helicopter, an airplane (for example, 120c in FIG. 8), a ship, a robot, a mechanical arm, a smart home device (for example, a printer 120e in FIG. 8), or the like. A specific communication technology and a specific device form that are used for the terminal device are not limited in this application. For ease of description, the following uses the terminal device as an example for description.

The network device and/or the terminal device may be at fixed positions, or may be movable. The network device and/or the terminal device may be deployed on land, including an indoor device, an outdoor device, a handheld device, or a vehicle-mounted device; may be deployed on water; or may be deployed on an airplane, a balloon, and an artificial satellite in the air. An environment/scenario at which the network device and the terminal device are located is not limited in this application. The network device and the terminal device may be deployed in a same environment/scenario or different environments/scenarios. For example, the network device and the terminal device are both deployed on land. Alternatively, the network device is deployed on land, and the terminal device is deployed on water. Examples are not provided one by one.

The following describes the technical solutions of this application with reference to specific embodiments.

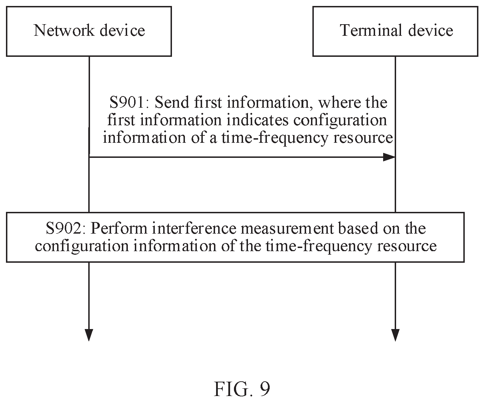

Embodiments of this application provide a communication method. The method may be applied to but is not limited to the communication system shown in FIG. 8. The method may be performed by a terminal device and a network device, or may be performed by components (modules, chips, or the like) in the terminal device and the network device, or may be performed by apparatuses that are correspondingly used in matching with the terminal device and the network device. Specific forms and quantities corresponding to the terminal device and the network device are not specifically limited in embodiments of this application. Refer to FIG. 9. A specific procedure of the method is as follows:
S901: The network device sends first information to the terminal device, where the first information indicates configuration information of a time-frequency resource.

Correspondingly, the terminal device receives the first information from the network device.

In this embodiment of this application, the network device may be an access network device (for example, a base station), and the terminal device is a terminal device served by the network device. For example, if the network device is a satellite base station, the terminal device is a terminal device served by the satellite base station, and may be referred to as a satellite terminal device for short. In the foregoing descriptions, the first information sent by the network device to the terminal device may be but is not limited to radio resource control RRC information.

In the foregoing descriptions, the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area.

In this embodiment of this application, both the first geographic coverage area and the second geographic coverage area are within a communication coverage range of the network device. The first geographic coverage area is greater than the second geographic coverage area, the first geographic coverage area may be an area covered by a wide beam transmitted by the network device, and the second geographic coverage area may be an area covered by a narrow beam transmitted by the network device. Therefore, in the foregoing descriptions, the first time-frequency resource may be considered to be used for interference measurement based on the wide beam, and the second time-frequency resource may be considered to be used for interference measurement based on the narrow beam.

In an implementation, before the network device sends a first message to the terminal device, the network device generates the configuration information of the time-frequency resource.

In this embodiment of this application, the configuration information of the first time-frequency resource indicates a configuration manner of the first time-frequency resource, and the configuration information of the second time-frequency resource indicates a configuration manner of the second time-frequency resource. Therefore, configuration manners correspondingly indicated by the configuration information of the first time-frequency resource and the configuration information of the second time-frequency resource may include but are not limited to the following several manners:
Configuration manner 1: The configuration information of the first time-frequency resource indicates that the first time-frequency resource is periodically configured, and the configuration information of the second time-frequency resource indicates that the second time-frequency resource is semi-persistently configured.
Configuration manner 2: The configuration information of the first time-frequency resource indicates that the first time-frequency resource is periodically configured, and the configuration information of the second time-frequency resource indicates that the second time-frequency resource is aperiodically configured.
Configuration manner 3: The configuration information of the first time-frequency resource indicates that the first time-frequency resource is semi-persistently configured, and the configuration information of the second time-frequency resource indicates that the second time-frequency resource is semi-persistently configured.
Configuration manner 4: The configuration information of the first time-frequency resource indicates that the first time-frequency resource is semi-persistently configured, and the configuration information of the second time-frequency resource indicates that the second time-frequency resource is aperiodically configured.
Configuration manner 5: The configuration information of the time-frequency resource indicates that the time-frequency resource is periodically configured.
Configuration manner 6: The configuration information of the time-frequency resource indicates that the time-frequency resource is semi-persistently configured.

S902: The network device and the terminal device perform interference measurement based on the configuration information of the time-frequency resource.

For the configuration manner 1, that the network device and the terminal device perform interference measurement based on the configuration information of the time-frequency resource may include: first performing, on the first time-frequency resource, interference measurement for the first geographic coverage area based on a configuration periodicity of the first time-frequency resource. Then, after the interference measurement for the first geographic coverage area is completed, the network device sends MAC CE activation information to the terminal device, where the MAC CE activation information is used to activate the second time-frequency resource. Then, the network device performs, on the second time-frequency resource, interference measurement for the second geographic coverage area. Further, after the interference measurement for the second geographic coverage area is completed, the network device sends MAC CE deactivation information to the terminal device, where the MAC CE deactivation information is used to deactivate the second time-frequency resource.

For the configuration manner 2, that the network device and the terminal device perform interference measurement based on the configuration information of the time-frequency resource may include: first performing, on the first time-frequency resource, interference measurement for the first geographic coverage area based on a configuration periodicity of the first time-frequency resource. After the interference measurement for the first geographic coverage area is completed, the network device sends first downlink control information DCI to the terminal device, where the first downlink control information DCI indicates to activate the second time-frequency resource. Further, the network device and the terminal device may perform, on the second time-frequency resource, interference measurement for the second geographic coverage area.

For the configuration manner 3, that the network device and the terminal device perform interference measurement based on the configuration information of the time-frequency resource may include: The network device sends first MAC CE activation information to the terminal device, where the first MAC CE activation information is used to activate the first time-frequency resource; and performs, on the first time-frequency resource, interference measurement for the first geographic coverage area.

After the interference measurement for the first geographic coverage area is completed, the network device sends first MAC CE deactivation information to the terminal device, where the first MAC CE deactivation information is used to deactivate the first time-frequency resource. Then, the network device sends second MAC CE activation information to the terminal device, where the second MAC CE activation information is used to activate the second time-frequency resource. Further, the network device and the terminal device may perform, on the second time-frequency resource, interference measurement for the second geographic coverage area. Finally, after the interference measurement for the second geographic coverage area is completed, the network device sends second MAC CE deactivation information to the terminal device, where the second MAC CE deactivation information is used to deactivate the second time-frequency resource.

For the configuration manner 4, that the network device and the terminal device perform interference measurement based on the configuration information of the time-frequency resource may include:

The network device sends MAC CE activation information to the terminal device, where the MAC CE activation information indicates to activate the first time-frequency resource. Then, the network device and the terminal device perform, on the first time-frequency resource, interference measurement for the first geographic coverage area. After the interference measurement for the first geographic coverage area is completed, the network device sends MAC CE deactivation information to the terminal device, where the MAC CE deactivation information indicates to deactivate the first time-frequency resource. Further, the network device sends second downlink control information DCI to the terminal device, where the second downlink control information DCI indicates to activate the second time-frequency resource. Further, the network device and the terminal device may perform, on the second time-frequency resource, interference measurement for the second geographic coverage area.

For the configuration manner 5, that the network device and the terminal device perform interference measurement based on the configuration information of the time-frequency resource may include: The network device and the terminal device may perform interference measurement for the first geographic coverage area based on a configuration periodicity of the time-frequency resource. After completing the interference measurement for the first geographic coverage area, the network device and the terminal device perform interference measurement for the second geographic coverage area.

For the configuration manner 6, that the network device and the terminal device perform interference measurement based on the configuration information of the time-frequency resource may include:
The network device sends MAC CE activation information to the terminal device, where the MAC CE activation information is used to activate the time-frequency resource. Then, the network device and the terminal device perform, on the time-frequency resource, interference measurement for the first geographic coverage area. After completing the interference measurement for the first geographic coverage area, the network device and the terminal device perform interference measurement for the second geographic coverage area. After the interference measurement for the second geographic coverage area is completed, the network device sends MAC CE deactivation information to the terminal device, where the MAC CE deactivation information is used to deactivate the time-frequency resource.

In an implementation, that the network device and the terminal device perform interference measurement for the first geographic coverage area may specifically include: The network device transmits at least one wide beam, and receives an uplink signal by using the at least one wide beam. Each wide beam corresponds to one first geographic coverage area, and a first geographic coverage area corresponding to the at least one wide beam lies within a terrestrial area covered by the network device and does not overlap with each other. The terminal device does not send an uplink signal to the network device during interference measurement performed by the network device for the first geographic coverage area. Further, the network device collects statistics on uplink signal power corresponding to each wide beam, and uses, as a first interference area, a first geographic coverage area corresponding to a wide beam for which uplink signal power reaches a preset first threshold.

In an implementation, that the network device and the terminal device perform interference measurement for the second geographic coverage area may specifically include: The network device transmits at least one narrow beam to the determined first interference area, and receives an uplink signal by using the at least one narrow beam. Each narrow beam corresponds to one second geographic coverage area, and a second geographic coverage area corresponding to the at least one narrow beam does not overlap with each other. The terminal device does not send an uplink signal to the network device during interference measurement performed by the network device for the second geographic coverage area. Further, the network device collects statistics on uplink signal power corresponding to each narrow beam, and uses, as a target interference area, a second geographic coverage area corresponding to a narrow beam for which uplink signal power reaches a preset second threshold.

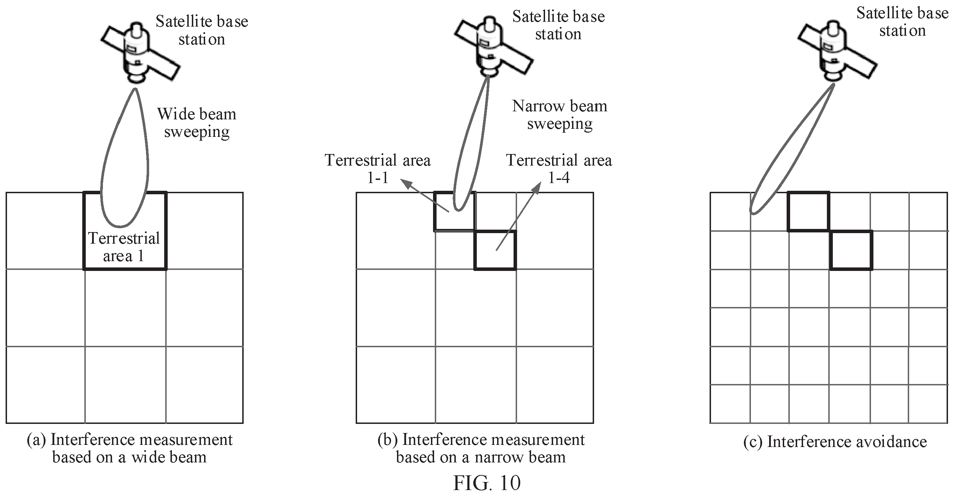

Based on the solution in FIG. 9, FIG. 10 is a diagram of avoiding uplink interference through interference measurement according to an embodiment of this application. Refer to (a) in FIG. 10. In an interference measurement phase based on a wide beam, a satellite base station sends, to a satellite terminal, configuration information #1 of a time-frequency resource (which may be equivalent to the foregoing configuration information of the first time-frequency resource) used for interference measurement based on the wide beam. After receiving the configuration information #1 of the time-frequency resource, the satellite terminal does not send an uplink signal on the time-frequency resource. The satellite base station transmits the wide beam to the ground on the time-frequency resource, sequentially sweeps different terrestrial areas by using the wide beam, and receives uplink signals from different terrestrial areas by using the wide beam. After sweeping an entire terrestrial area by using the wide beam, the satellite base station collects statistics on a power value of an uplink signal corresponding to each terrestrial area swept by using the wide beam. If the satellite base station determines that a power value of an uplink signal from a terrestrial area 1 reaches a preset threshold, the satellite base station determines that the terrestrial area 1 is an area with strong interference.

Refer to (b) in FIG. 10. In an interference measurement phase based on a narrow beam, the satellite base station sends, to the satellite terminal, configuration information #2 of a time-frequency resource (which may be equivalent to the foregoing configuration information of the second time-frequency resource) used for interference measurement based on the narrow beam. After receiving the configuration information #2 of the time-frequency resource, the satellite terminal does not send an uplink signal on the time-frequency resource. The satellite base station transmits the narrow beam to the terrestrial area 1 on the time-frequency resource, sequentially sweeps different terrestrial areas (for example, a terrestrial area 1-1, a terrestrial area 1-2, a terrestrial area 1-3, and a terrestrial area 1-4) in the terrestrial area 1 by using the narrow beam, and receives uplink signals from different terrestrial areas by using the narrow beam. After sweeping the entire terrestrial area 1 by using the narrow beam, the satellite base station collects statistics on a power value of an uplink signal corresponding to each terrestrial area swept by using the narrow beam. If the satellite base station determines that only power values of uplink signals from the terrestrial area 1-1 and the terrestrial area 1-4 reach a preset threshold, the satellite base station determines that the terrestrial area 1-1 and the terrestrial area 1-4 are areas with strong interference.

Refer to (c) in FIG. 10. In an interference avoidance phase, during beam scheduling, the satellite base station may indicate not to point a beam to the terrestrial area 1-1 and the terrestrial area 1-4, to effectively avoid uplink interference.

It should be noted that, in FIG. 10, in both the interference measurement phase based on the wide beam and the interference measurement phase based on the narrow beam, a plurality of terrestrial areas are sequentially swept by using one beam, to perform interference measurement. During actual application, in (a) in FIG. 10, alternatively, the satellite base station may simultaneously transmit a plurality of wide beams to the ground. Each wide beam correspondingly covers one terrestrial area, and terrestrial areas correspondingly covered by the plurality of wide beams do not overlap. The satellite base station may simultaneously collect statistics on power values of interfered uplink signals from all terrestrial areas, to determine a terrestrial area with strong interference. Similarly, in (b) in FIG. 10, alternatively, the satellite base station may simultaneously transmit a plurality of narrow beams to the terrestrial area 1. Each narrow beam correspondingly covers one sub terrestrial area in the terrestrial area 1, and sub terrestrial areas correspondingly covered by the plurality of narrow beams do not overlap. The satellite base station may simultaneously collect statistics on power values of interfered uplink signals from all sub terrestrial areas, to determine a specific sub terrestrial area with strong interference in the terrestrial area 1. Therefore, when the satellite base station normally communicates with the satellite terminal subsequently, the sub terrestrial area with strong interference may be avoided, to reduce uplink interference, thereby ensuring a signal to interference plus noise ratio (signal to interference plus noise ratio, SINR), of an uplink signal received by the satellite base station from the satellite terminal.

In conclusion, embodiments of this application provide the communication method. The method includes: The terminal device receives the first information from the network device, where the first information indicates the configuration information of the time-frequency resource, the configuration information of the time-frequency resource includes the configuration information of the first time-frequency resource and the configuration information of the second time-frequency resource, the first time-frequency resource is used for interference measurement for the first geographic coverage area, the second time-frequency resource is used for interference measurement for the second geographic coverage area, and the second geographic coverage area is a part of the first geographic coverage area. The terminal device performs interference measurement based on the configuration information of the time-frequency resource. According to the method, interference measurement can be effectively implemented, to resolve an interference problem in communication, and overheads of resources occupied during interference measurement can be effectively reduced.

According to the data processing method shown in FIG. 9, the following further provides detailed descriptions by using several specific embodiments.

### Embodiment 1

In Embodiment 1, an example in which a network device is a satellite base station and the satellite base station serves a terminal UE 1 is used to describe in detail the configuration manner 1 and the configuration manner 2 in step S901 in the solution in FIG. 9.

The satellite base station may include, in RRC signaling, configuration information of a time-frequency resource 1 used for interference measurement based on a wide beam and configuration information of a time-frequency resource 2 used for interference measurement based on a narrow beam, and then send the RRC signaling to the UE 1, so that the UE 1 can learn of, by parsing the RRC signaling, the configuration information corresponding to the time-frequency resource 1 and the configuration information corresponding to the time-frequency resource 2. Specific configuration manners corresponding to the time-frequency resource 1 and the time-frequency resource 2 are as follows:

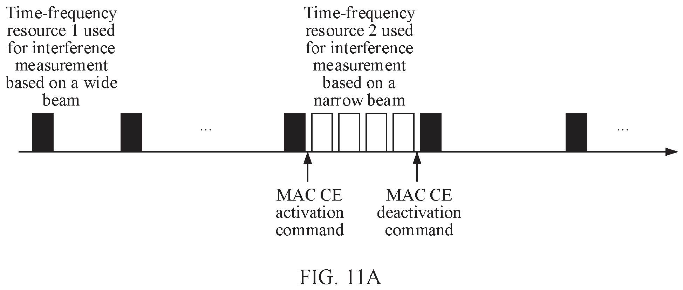

Configuration manner 1: Refer to FIG. 11A. The time-frequency resource 1 used for the interference measurement based on the wide beam is periodically configured, and a periodicity of the time-frequency resource 1 is T1. The time-frequency resource 2 used for the interference measurement based on the narrow beam is semi-persistently configured, a periodicity of the time-frequency resource 2 is T2, and the time-frequency resource 2 needs to be activated and deactivated by using MAC CE commands. A specific implementation is as follows:

Based on the configuration periodicity T1 of the time-frequency resource 1, the satellite base station may first perform interference measurement based on the wide beam on the time-frequency resource 1, and the UE 1 does not send an uplink signal to the satellite base station on the time-frequency resource 1. After completing the interference measurement based on the wide beam, the satellite base station sends a MAC CE activation command to the UE 1, to activate the time-frequency resource 2. In this way, the satellite base station may perform interference measurement based on the narrow beam on the time-frequency resource 2. After receiving the MAC CE activation command and after the activation command takes effect, the UE 1 does not send an uplink signal to the satellite base station on the time-frequency resource 2. After completing the interference measurement based on the narrow beam, the satellite base station sends a MAC CE deactivation command to the UE 1. After the UE 1 receives the MAC CE deactivation command and after the deactivation command takes effect, the UE 1 may communicate with the satellite base station by using the time-frequency resource 2.

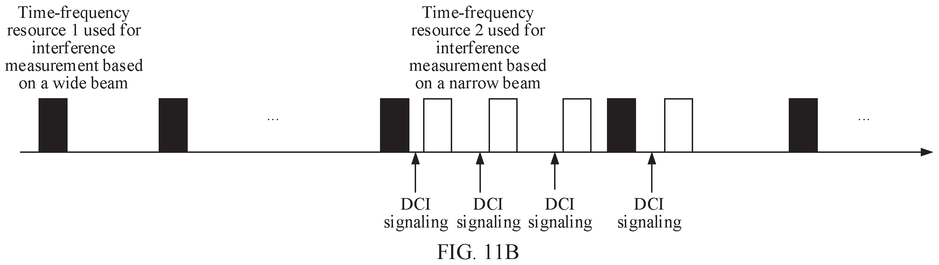

Configuration manner 2: Refer to FIG. 11B. The time-frequency resource 1 used for the interference measurement based on the wide beam is periodically configured, and a periodicity of the time-frequency resource 1 is T1. The time-frequency resource 2 used for the interference measurement based on the narrow beam is aperiodically configured, and the time-frequency resource 2 needs to be activated by using DCI signaling. A specific implementation is as follows:
Based on the configuration periodicity T1 of the time-frequency resource 1, the satellite base station may first perform interference measurement based on the wide beam on the time-frequency resource 1, and the UE 1 does not send an uplink signal to the satellite base station on the time-frequency resource 1. After completing the interference measurement based on the wide beam, the satellite base station sends DCI signaling to the UE 1, to activate the time-frequency resource 2. In this way, the satellite base station may perform interference measurement based on the narrow beam on the time-frequency resource 2. After receiving the DCI signaling, the UE 1 does not send an uplink signal to the satellite base station on the time-frequency resource 2. To enable the satellite base station to continuously use the time-frequency resource 2 to perform interference measurement based on the narrow beam, the satellite base station needs to send DCI signaling to the UE 1 at an interval a plurality of times, to activate the time-frequency resource 2.

In FIG. 11A and FIG. 11B, on a time axis t, black-filled boxes each represent a time-frequency resource 1 used for interference measurement based on a wide beam, and white-filled boxes each represent a time-frequency resource 2 used for interference measurement based on a narrow beam.

In Embodiment 1, uplink interference features at different moments may be different, the time-frequency resource 1 used for the interference measurement based on the wide beam is periodically configured, and a network device side may continuously track and determine an area with strong interference through periodic wide beam sweeping. The time-frequency resource 2 used for the interference measurement based on the narrow beam is semi-persistently or aperiodically configured. In this way, the network device side can flexibly activate/deactivate the time-frequency resource 2 based on a wide beam sweeping result, to perform interference area sweeping at a finer granularity by using the narrow beam. According to the method, the network device side can rapidly determine an area with strong interference, and overheads generated by beam sweeping for determining the interference area can be further reduced.

### Embodiment 2

In Embodiment 2, an example in which a network device is a satellite base station and the satellite base station serves a terminal UE 1 is used to describe in detail the configuration manner 3 and the configuration manner 4 in step S901 in the solution in FIG. 9.

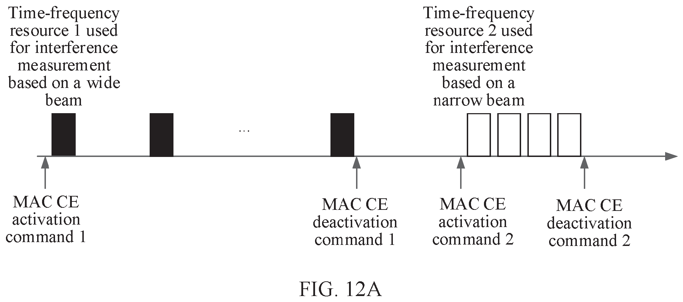

The satellite base station may include, in RRC signaling, configuration information of a time-frequency resource 1 used for interference measurement based on a wide beam and configuration information of a time-frequency resource 2 used for interference measurement based on a narrow beam, and then send the RRC signaling to the UE 1, so that the UE 1 can learn of, by parsing the RRC signaling, the configuration information corresponding to the time-frequency resource 1 and the configuration information corresponding to the time-frequency resource 2. Specific configuration manners corresponding to the time-frequency resource 1 and the time-frequency resource 2 are as follows:
Configuration manner 3: Refer to FIG. 12A. The time-frequency resource 1 used for the interference measurement based on the wide beam is semi-persistently configured, a periodicity of the time-frequency resource 1 is T1, and the time-frequency resource 1 needs to be activated and deactivated by using MAC CE commands. The time-frequency resource 2 used for the interference measurement based on the narrow beam is semi-persistently configured, and a periodicity of the time-frequency resource 2 is T2. Similarly, the time-frequency resource 2 also needs to be activated and deactivated by using MAC CE commands. A specific implementation is as follows:
The satellite base station first sends a MAC CE activation command 1 to the UE 1, to activate the time-frequency resource 1 used for the interference measurement based on the wide beam. After the command takes effect, the satellite base station performs interference measurement based on the wide beam on the time-frequency resource 1, and the UE 1 does not send an uplink signal to the satellite base station on the time-frequency resource 1. After completing the interference measurement based on the wide beam, the satellite base station sends a MAC CE deactivation command 1 to the UE 1, to deactivate the time-frequency resource 1.

Then, the satellite base station sends a MAC CE activation command 2 to the UE 1, to activate the time-frequency resource 2 used for the interference measurement based on the narrow beam. After the command takes effect, the satellite base station performs interference measurement based on the narrow beam on the time-frequency resource 2, and the UE 1 does not send an uplink signal to the satellite base station on the time-frequency resource 2. After completing the interference measurement based on the narrow beam, the satellite base station sends a MAC CE deactivation command 2 to the UE 1, to deactivate the time-frequency resource 2.

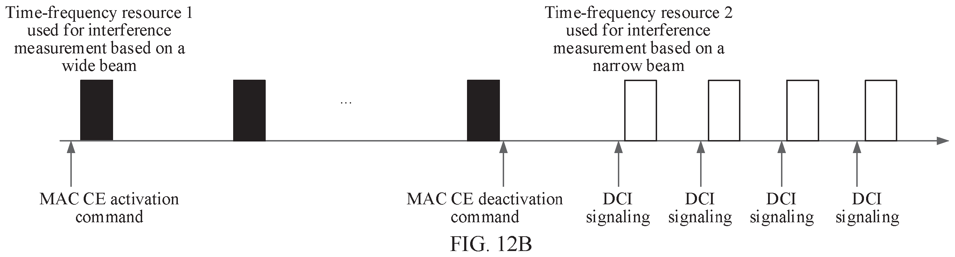

Configuration manner 4: Refer to FIG. 12B. The time-frequency resource 1 used for the interference measurement based on the wide beam is semi-persistently configured, a periodicity of the time-frequency resource 1 is T1, and the time-frequency resource 1 needs to be activated and deactivated by using MAC CE commands. The time-frequency resource 2 used for the interference measurement based on the narrow beam is aperiodically configured, and the time-frequency resource 2 needs to be activated by using DCI signaling. A specific implementation is as follows:
The satellite base station first sends a MAC CE activation command to the UE 1, to activate the time-frequency resource 1 used for the interference measurement based on the wide beam. After the command takes effect, the satellite base station performs interference measurement based on the wide beam on the time-frequency resource 1, and the UE 1 does not send an uplink signal to the satellite base station on the time-frequency resource 1. After completing the interference measurement based on the wide beam, the satellite base station sends a MAC CE deactivation command to the UE 1, to deactivate the time-frequency resource 1.

Then, the satellite base station sends DCI signaling to the UE 1, to activate the time-frequency resource 2 used for the interference measurement based on the narrow beam. In this way, the satellite base station may perform interference measurement based on the narrow beam on the time-frequency resource 2. After receiving the DCI signaling, the UE 1 does not send an uplink signal to the satellite base station on the time-frequency resource 2. To enable the satellite base station to continuously use the time-frequency resource 2 to perform interference measurement based on the narrow beam, the satellite base station needs to send DCI signaling to the UE 1 at an interval a plurality of times, to activate the time-frequency resource 2.

In FIG. 12A and FIG. 12B, on a time axis t, black-filled boxes each represent a time-frequency resource 1 used for interference measurement based on a wide beam, and white-filled boxes each represent a time-frequency resource 2 used for interference measurement based on a narrow beam.

In Embodiment 2, the time-frequency resource used for the interference measurement based on the wide beam (that is, a time-frequency resource that is used for interference measurement and that is associated with the wide beam) is semi-persistently configured. A network device side may flexibly activate/deactivate, based on a time-varying characteristic or a measurement requirement of uplink interference, the time-frequency resource used for the interference measurement based on the wide beam, to sweep an interference area by using the wide beam. The time-frequency resource used for the interference measurement based on the narrow beam (that is, a time-frequency resource that is used for interference measurement and that is associated with the narrow beam) is semi-persistently or aperiodically configured. The network device side may flexibly activate/deactivate, based on a wide beam sweeping result, the time-frequency resource used for the interference measurement based on the narrow beam, to perform interference area sweeping at a finer granularity by using the narrow beam. According to the method, the network device side can rapidly determine an area with strong interference, and overheads generated by beam sweeping for determining the interference area can be further reduced.

### Embodiment 3

In Embodiment 3, an example in which a network device is a satellite base station and the satellite base station serves a terminal UE 1 is used to describe in detail the configuration manner 5 and the configuration manner 6 in step S901 in the solution in FIG. 9.

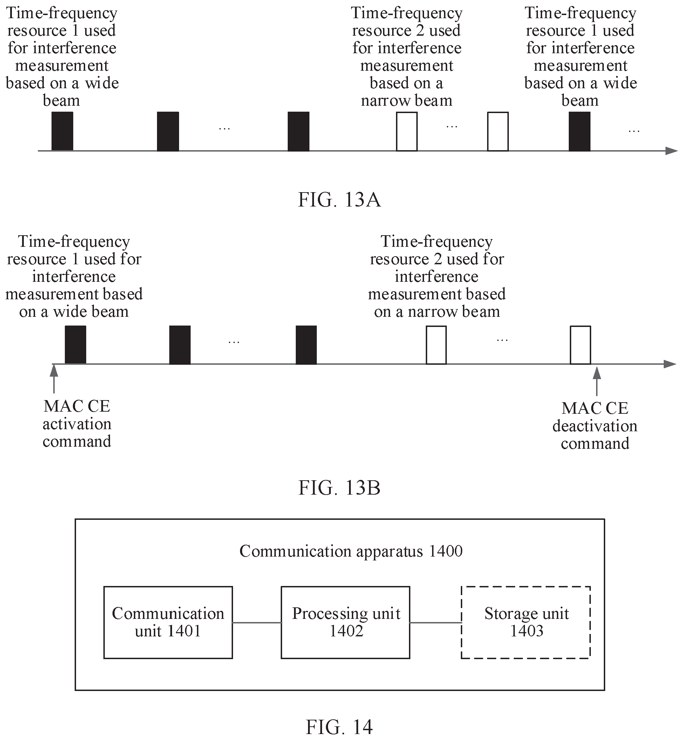

The satellite base station may include, in RRC signaling, configuration information of a time-frequency resource 1 used for interference measurement based on a wide beam and configuration information of a time-frequency resource 2 used for interference measurement based on a narrow beam, and then send the RRC signaling to the UE 1, so that the UE 1 can learn of, by parsing the RRC signaling, the configuration information corresponding to the time-frequency resource 1 and the configuration information corresponding to the time-frequency resource 2. Specific configuration manners corresponding to the time-frequency resource 1 and the time-frequency resource 2 are as follows:
Configuration manner 5: Refer to FIG. 13A. A time-frequency resource segment used for the interference measurement based on the wide beam and the interference measurement based on the narrow beam is periodically configured, and a periodicity of the time-frequency resource segment is T3. A specific implementation is as follows:
Based on the configuration periodicity T3 of the time-frequency resource segment, the satellite base station may first perform interference measurement based on the wide beam on the time-frequency resource segment. After completing the interference measurement based on the wide beam, the satellite base station may perform interference measurement based on the narrow beam. After the interference measurement based on the narrow beam is completed, the time-frequency resource may be used for the interference measurement based on the wide beam again. The time-frequency resource segment is used by analogy.

Configuration manner 6: Refer to FIG. 13B. A specific range of a time-frequency resource segment used for the interference measurement based on the wide beam and the interference measurement based on the narrow beam may be flexibly preset, and the time-frequency resource segment is semi-persistently configured, and needs to be activated and deactivated by using MAC CEs. A specific implementation is as follows:
The satellite base station first sends a MAC CE activation command to the UE 1, to activate the time-frequency resource segment. After the command takes effect, on the time-frequency resource segment, the UE 1 does not send an uplink signal to the satellite base station, and the satellite base station performs interference measurement based on the wide beam. After completing the interference measurement based on the wide beam, the satellite base station may perform interference measurement based on the narrow beam. After completing the interference measurement based on the narrow beam, the satellite base station sends a MAC CE deactivation command to the UE 1, to indicate to deactivate the time-frequency resource segment. Then, the UE 1 may normally communicate with the satellite base station on the time-frequency resource segment.

In FIG. 13A and FIG. 13B, on a time axis t, black-filled boxes each represent a time-frequency resource 1 used for interference measurement based on a wide beam, and white-filled boxes each represent a time-frequency resource 2 used for interference measurement based on a narrow beam.

In Embodiment 3, a time-frequency resource used for interference measurement is periodically or semi-persistently configured. A network device side may flexibly activate/deactivate the time-frequency resource based on a time-varying characteristic or a measurement requirement of uplink interference, to sweep an interference area by using the wide beam and the narrow beam. The time-frequency resource used for the interference measurement is not fixedly associated with the wide beam and the narrow beam (that is, is not fixedly used for the interference measurement based on the wide beam or the interference measurement based on the narrow beam). Instead, the network device side flexibly uses the time-frequency resource for the interference measurement based on the wide beam or the narrow beam based on a sweeping requirement, so that an area with strong interference can be effectively determined, and signaling overheads can be effectively reduced.

In the foregoing embodiments provided in this application, the method provided in embodiments of this application is described from a perspective of interaction between devices. To implement functions in the method provided in the foregoing embodiments of this application, a network device or a terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into modules is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 14, an embodiment of this application further provides a communication apparatus 1400, configured to implement a function of the network device or the terminal device in the foregoing method. For example, the communication apparatus 1400 may be a software module or a chip system. In this embodiment of this application, the chip system may include a chip, or may include a chip and another discrete device. The communication apparatus 1400 may include a communication unit 1401 and a processing unit 1402.

In this embodiment of this application, the communication unit 1401 may also be referred to as a transceiver unit, and may include a sending unit and/or a receiving unit, which are respectively configured to perform sending and receiving steps of the network device or the terminal device in the foregoing method embodiments. The processing unit 1402 may be configured to read instructions and/or data in a storage module, to enable the communication apparatus 1400 to implement the foregoing method embodiments.

Optionally, the communication apparatus 1400 may further include a storage unit 1403. The storage unit 1403 is equivalent to the storage module, and may be configured to store the instructions and/or the data.

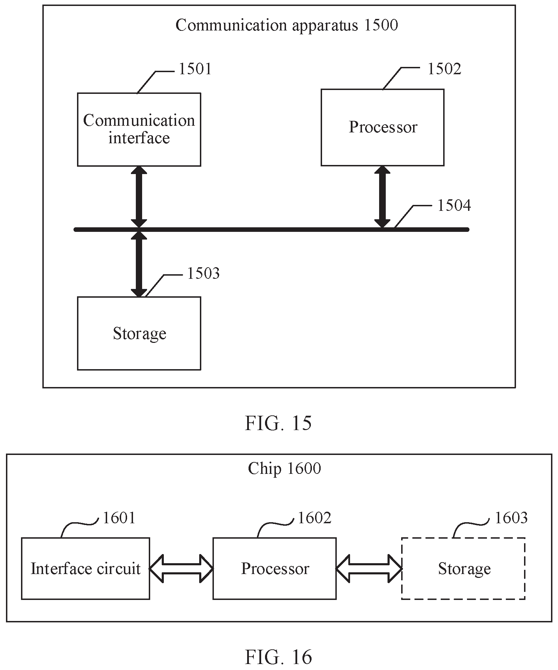

The following describes in detail communication apparatuses provided in embodiments of this application with reference to FIG. 14 and FIG. 15. It should be understood that descriptions of apparatus embodiments correspond to descriptions of the method embodiments. Therefore, for content that is not described in detail, refer to the method embodiment in FIG. 9. For brevity, details are not described herein again.

The communication unit 1401 may also be referred to as a transceiver, a transceiver machine, a transceiver apparatus, or the like. The processing unit may also be referred to as a processor, a processing board, a processing module, a processing apparatus, or the like. Optionally, a device that is in the communication unit 1401 and that is configured to implement a receiving function may be considered as a receiving unit, and a device that is in the communication unit 1401 and that is configured to implement a sending function may be considered as a sending unit. In other words, the communication unit 1401 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

When the communication apparatus 1400 implements the terminal device in the procedure shown in FIG. 9 in the foregoing embodiment,
the communication unit 1401 is configured to receive first information, where the first information indicates configuration information of a time-frequency resource, the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area; and
the processing unit 1402 is configured to perform interference measurement based on the configuration information of the time-frequency resource.

When the communication apparatus 1400 implements the network device in the procedure shown in FIG. 9 in the foregoing embodiment,
the processing unit 1402 is configured to generate configuration information of a time-frequency resource, where the configuration information of the time-frequency resource includes configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area;
the communication unit 1401 is configured to send first information, where the first information indicates the configuration information of the time-frequency resource; and
the processing unit 1402 is configured to perform interference measurement based on the configuration information of the time-frequency resource.

The foregoing is merely an example. The processing unit 1402 and the communication unit 1401 may further perform other functions. For more detailed descriptions, refer to related descriptions in the method embodiment shown in FIG. 9. Details are not described herein again.

FIG. 15 shows a communication apparatus 1500 according to an embodiment of this application. The communication apparatus shown in FIG. 15 may be an implementation of a hardware circuit of the communication apparatus shown in FIG. 14. The communication apparatus 1500 is applicable to the foregoing flowchart, and performs a function of the terminal device, the first access network device, or the second access network device in the foregoing method embodiments. For ease of description, FIG. 15 shows only main components of the communication apparatus.

As shown in FIG. 15, the communication apparatus 1500 includes a communication interface 1501 and a processor 1502. The communication interface 1501 and the processor 1502 are coupled to each other. It may be understood that the communication interface 1501 may be a transceiver or an input/output interface, or may be an interface circuit like a transceiver circuit. Optionally, the communication apparatus 1500 may further include a storage 1503, configured to store instructions executed by the processor 1502, store input data required by the processor 1502 to run the instructions, or store data generated after the processor 1502 runs the instructions.

When the communication apparatus 1500 is configured to implement the method shown in FIG. 9, the communication interface 1501 is configured to implement a function of the communication unit 1401, and the processor 1502 is configured to implement a function of the processing unit 1402.

In this embodiment of this application, a specific connection medium between the communication interface 1501, the processor 1502, and the storage 1503 is not limited. In this embodiment of this application, the storage 1503, the processor 1502, and the communication interface 1501 are connected through a communication bus 1504 in FIG. 15. The communication bus 1504 is represented by using a thick line in FIG. 15. A connection manner between other components is merely an example for description, and is not limited thereto. The communication bus 1504 may be classified into an address bus, a data bus, a control bus, and the like. For ease of representation, only one thick line is used for representation in FIG. 15, but this does not mean that there is only one bus or only one type of bus.

When the communication apparatus is a chip, FIG. 16 is a diagram of a simplified apparatus structure of the chip. The chip 1600 includes an interface circuit 1601 and one or more processors 1602. Optionally, the chip 1600 may further include a bus. Specifically:
The processor 1602 may be an integrated circuit chip and has a signal processing capability. In an implementation process, steps in the foregoing communication method may be implemented through a hardware integrated logic circuit in the processor 1602, or by using instructions in a form of software. The processor 1602 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in embodiments of this application. The general-purpose processor may be a microprocessor, or the processor may be any conventional processor or the like.

The interface circuit 1601 may be configured to send or receive data, instructions, or information. The processor 1602 may perform processing by using the data, the instructions, or other information received by the interface circuit 1601, and may send processed information through the interface circuit 1601.

Optionally, the chip further includes a storage 1603. The storage 1603 may include a read-only memory and a random access memory, and provide operation instructions and data for the processor. Apart of the storage 1603 may further include a non-volatile random access memory (NVRAM).

Optionally, the storage stores an executable software module or a data structure, and the processor may perform a corresponding operation by invoking the operation instructions stored in the storage (the operation instructions may be stored in an operating system).

Optionally, the chip may be used in the network device or the terminal device in embodiments of this application. Optionally, the interface circuit 1601 may be configured to output an execution result of the processor 1602. For the communication method provided in one or more embodiments of this application, refer to the foregoing embodiments. Details are not described herein again.

It should be noted that functions respectively corresponding to the interface circuit 1601 and the processor 1602 may be implemented by using a hardware design, may be implemented by using a software design, or may be implemented by using a combination of software and hardware. This is not limited herein.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is enabled to implement the method performed by the network device or the terminal device in the foregoing method embodiments.

An embodiment of this application further provides a computer program product including instructions. When the instructions are executed by a computer, the computer is enabled to implement the method performed by the network device or the terminal device in the foregoing method embodiments.

An embodiment of this application further provides a chip, including a processor, configured to invoke a computer program or computer instructions stored in a storage, to enable the processor to perform the communication method in the embodiment shown in FIG. 9.

In a possible implementation, an input of the chip corresponds to the receiving operation in the embodiment shown in FIG. 9, and an output of the chip corresponds to the sending operation in the embodiment shown in FIG. 9.

Optionally, the processor is coupled to the storage through an interface.

Optionally, the chip further includes the storage. The storage stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the communication method in the embodiment shown in FIG. 9. The storage mentioned anywhere above may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, refer to the corresponding communication method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely logical function division, and may be other division during actual implementation. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

Through the descriptions of the foregoing implementations, a person skilled in the art may clearly understand that embodiments of this application may be implemented by hardware, firmware or a combination thereof. When software is used to implement embodiments, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. Examples of the computer-readable medium may include but are not limited to: a RAM, a ROM, an electrically erasable programmable read-only memory (electrically erasable programmable read-only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and that is accessible to the computer. In addition, any connection may be properly defined as a computer-readable medium. For example, if software is transmitted from a website, a server, or another remote source through a coaxial cable, an optical fiber/cable, a twisted pair, a digital subscriber line (digital subscriber line, DSL), or wireless technologies such as infrared, radio, and microwave, the coaxial cable, the optical fiber/cable, the twisted pair, the DSL, or the wireless technologies such as infrared, radio, and microwave are included in fixation of a medium to which the coaxial cable, the optical fiber/cable, the twisted pair, the DSL, or the wireless technologies such as infrared, radio, and microwave belong. For example, a disk (disk) and a disc (disc) used in embodiments of this application include a compact disc (compact disc, CD), a laser disc, an optical disc, a digital versatile disc (digital video disc, DVD), a floppy disk, and a Blu-ray disc. The disk usually copies data by a magnetic means, and the disc copies data optically by a laser means. The foregoing combination should also be included in the protection scope of the computer-readable medium.

In conclusion, the foregoing descriptions are merely embodiments of this application and are not intended to limit the protection scope of this application. Any modification, equivalent replacement, and improvement made based on the disclosure of this application shall fall within the protection scope of this application.

## Claims

1. A communication method, wherein the method is applied to a terminal device or a chip in the terminal device, and comprises:
receiving first information, wherein the first information indicates configuration information of a time-frequency resource, the configuration information of the time-frequency resource comprises configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area; and
performing interference measurement based on the configuration information of the time-frequency resource.

2. The method according to claim 1, wherein the configuration information of the first time-frequency resource indicates that the first time-frequency resource is periodically configured, and the configuration information of the second time-frequency resource indicates that the second time-frequency resource is semi-persistently configured; and
the performing interference measurement based on the configuration information of the time-frequency resource comprises:
performing, on the first time-frequency resource, interference measurement for the first geographic coverage area based on a configuration periodicity of the first time-frequency resource;
receiving MAC CE activation information, wherein the MAC CE activation information is used to activate the second time-frequency resource; and
performing, on the second time-frequency resource, interference measurement for the second geographic coverage area.

3. The method according to claim 2, wherein the method further comprises:
receiving MAC CE deactivation information, wherein the MAC CE deactivation information is used to deactivate the second time-frequency resource.

4. The method according to claim 1, wherein the configuration information of the first time-frequency resource indicates that the first time-frequency resource is periodically configured, and the configuration information of the second time-frequency resource indicates that the second time-frequency resource is aperiodically configured; and
the performing interference measurement based on the configuration information of the time-frequency resource comprises:
performing, on the first time-frequency resource, interference measurement for the first geographic coverage area based on a configuration periodicity of the first time-frequency resource;
receiving first downlink control information DCI, wherein the first downlink control information DCI indicates to activate the second time-frequency resource; and
performing, on the second time-frequency resource, interference measurement for the second geographic coverage area.

5. The method according to claim 1, wherein the configuration information of the first time-frequency resource indicates that the first time-frequency resource is semi-persistently configured, and the configuration information of the second time-frequency resource indicates that the second time-frequency resource is semi-persistently configured; and
the performing interference measurement based on the configuration information of the time-frequency resource comprises:
receiving first MAC CE activation information, wherein the first MAC CE activation information is used to activate the first time-frequency resource;
performing, on the first time-frequency resource, interference measurement for the first geographic coverage area;
receiving first MAC CE deactivation information, wherein the first MAC CE deactivation information is used to deactivate the first time-frequency resource;
receiving second MAC CE activation information, wherein the second MAC CE activation information is used to activate the second time-frequency resource; and
performing, on the second time-frequency resource, interference measurement for the second geographic coverage area.

6. The method according to claim 5, wherein the method further comprises:
receiving second MAC CE deactivation information, wherein the second MAC CE deactivation information is used to deactivate the second time-frequency resource.

7. The method according to claim 1, wherein the configuration information of the first time-frequency resource indicates that the first time-frequency resource is semi-persistently configured, and the configuration information of the second time-frequency resource indicates that the second time-frequency resource is aperiodically configured; and
the performing interference measurement based on the configuration information of the time-frequency resource comprises:
receiving MAC CE activation information, wherein the MAC CE activation information indicates to activate the first time-frequency resource;
performing, on the first time-frequency resource, interference measurement for the first geographic coverage area;
receiving MAC CE deactivation information, wherein the MAC CE deactivation information indicates to deactivate the first time-frequency resource;
receiving second downlink control information DCI, wherein the second downlink control information DCI indicates to activate the second time-frequency resource; and
performing, on the second time-frequency resource, interference measurement for the second geographic coverage area.

8. The method according to claim 1, wherein the configuration information of the time-frequency resource indicates that the time-frequency resource is periodically configured; and
the performing interference measurement based on the configuration information of the time-frequency resource comprises:
performing, on the time-frequency resource, interference measurement for the first geographic coverage area and interference measurement for the second geographic coverage area based on a periodicity of the time-frequency resource.

9. The method according to claim 1, wherein the configuration information of the time-frequency resource indicates that the time-frequency resource is semi-persistently configured; and
the performing interference measurement based on the configuration information of the time-frequency resource comprises:
receiving MAC CE activation information, wherein the MAC CE activation information is used to activate the time-frequency resource; and
performing, on the time-frequency resource, interference measurement for the first geographic coverage area and interference measurement for the second geographic coverage area.

10. The method according to claim 9, wherein the method further comprises:
receiving MAC CE deactivation information, wherein the MAC CE deactivation information is used to deactivate the time-frequency resource.

11. The method according to any one of claims 1 to 10, wherein the first information is radio resource control RRC information.

12. A communication method, wherein the method is applied to a network device or a chip in the network device, and comprises:
generating configuration information of a time-frequency resource, wherein the configuration information of the time-frequency resource comprises configuration information of a first time-frequency resource and configuration information of a second time-frequency resource, the first time-frequency resource is used for interference measurement for a first geographic coverage area, the second time-frequency resource is used for interference measurement for a second geographic coverage area, and the second geographic coverage area is a part of the first geographic coverage area;
sending first information, wherein the first information indicates the configuration information of the time-frequency resource; and
performing interference measurement based on the configuration information of the time-frequency resource.

13. The method according to claim 12, wherein the configuration information of the first time-frequency resource indicates that the first time-frequency resource is periodically configured, and the configuration information of the second time-frequency resource indicates that the second time-frequency resource is semi-persistently configured; and
the performing interference measurement based on the configuration information of the time-frequency resource comprises:
performing, on the first time-frequency resource, interference measurement for the first geographic coverage area based on a configuration periodicity of the first time-frequency resource;
sending MAC CE activation information after completing the interference measurement for the first geographic coverage area, wherein the MAC CE activation information is used to activate the second time-frequency resource;
performing, on the second time-frequency resource, interference measurement for the second geographic coverage area; and
sending MAC CE deactivation information after completing the interference measurement for the second geographic coverage area, wherein the MAC CE deactivation information is used to deactivate the second time-frequency resource.

14. The method according to claim 12, wherein the configuration information of the first time-frequency resource indicates that the first time-frequency resource is periodically configured, and the configuration information of the second time-frequency resource indicates that the second time-frequency resource is aperiodically configured; and
the performing interference measurement based on the configuration information of the time-frequency resource comprises:
performing, on the first time-frequency resource, interference measurement for the first geographic coverage area based on a configuration periodicity of the first time-frequency resource;
sending first downlink control information DCI after completing the interference measurement for the first geographic coverage area, wherein the first downlink control information DCI indicates to activate the second time-frequency resource; and
performing, on the second time-frequency resource, interference measurement for the second geographic coverage area.

15. The method according to claim 12, wherein the configuration information of the first time-frequency resource indicates that the first time-frequency resource is semi-persistently configured, and the configuration information of the second time-frequency resource indicates that the second time-frequency resource is semi-persistently configured; and
the performing interference measurement based on the configuration information of the time-frequency resource comprises:
sending first MAC CE activation information, wherein the first MAC CE activation information is used to activate the first time-frequency resource;
performing, on the first time-frequency resource, interference measurement for the first geographic coverage area;
sending first MAC CE deactivation information after completing the interference measurement for the first geographic coverage area, wherein the first MAC CE deactivation information is used to deactivate the first time-frequency resource;
sending second MAC CE activation information, wherein the second MAC CE activation information is used to activate the second time-frequency resource;
performing, on the second time-frequency resource, interference measurement for the second geographic coverage area; and
sending second MAC CE deactivation information after completing the interference measurement for the second geographic coverage area, wherein the second MAC CE deactivation information is used to deactivate the second time-frequency resource.

16. The method according to claim 12, wherein the configuration information of the first time-frequency resource indicates that the first time-frequency resource is semi-persistently configured, and the configuration information of the second time-frequency resource indicates that the second time-frequency resource is aperiodically configured; and
the performing interference measurement based on the configuration information of the time-frequency resource comprises:
sending MAC CE activation information, wherein the MAC CE activation information indicates to activate the first time-frequency resource;
performing, on the first time-frequency resource, interference measurement for the first geographic coverage area;
sending MAC CE deactivation information after completing the interference measurement for the first geographic coverage area, wherein the MAC CE deactivation information indicates to deactivate the first time-frequency resource;
sending second downlink control information DCI, wherein the second downlink control information DCI indicates to activate the second time-frequency resource; and
performing, on the second time-frequency resource, interference measurement for the second geographic coverage area.

17. The method according to claim 12, wherein the configuration information of the time-frequency resource indicates that the time-frequency resource is periodically configured; and
the performing interference measurement based on the configuration information of the time-frequency resource comprises:
performing interference measurement for the first geographic coverage area based on a configuration periodicity of the time-frequency resource; and
performing interference measurement for the second geographic coverage area after completing the interference measurement for the first geographic coverage area.

18. The method according to claim 12, wherein the configuration information of the time-frequency resource indicates that the time-frequency resource is semi-persistently configured; and
the performing interference measurement based on the configuration information of the time-frequency resource comprises:
sending MAC CE activation information, wherein the MAC CE activation information is used to activate the time-frequency resource;
performing, on the time-frequency resource, interference measurement for the first geographic coverage area;
performing interference measurement for the second geographic coverage area after completing the interference measurement for the first geographic coverage area; and
sending MAC CE deactivation information after completing the interference measurement for the second geographic coverage area, wherein the MAC CE deactivation information is used to deactivate the time-frequency resource.

19. The method according to any one of claims 13 to 18, wherein the performing interference measurement for the first geographic coverage area comprises:
transmitting at least one wide beam, and receiving an uplink signal by using the at least one wide beam, wherein each wide beam corresponds to one first geographic coverage area, and the first geographic coverage area corresponding to the at least one wide beam lies within a terrestrial area covered by the network device and does not overlap with each other;
collecting statistics on uplink signal power corresponding to each wide beam; and
using, as a first interference area, the first geographic coverage area corresponding to a wide beam for which the uplink signal power reaches a preset first threshold.

20. The method according to any one of claims 13 to 19, wherein the performing interference measurement for the second geographic coverage area comprises:
transmitting at least one narrow beam to the first interference area, and receiving an uplink signal by using the at least one narrow beam, wherein each narrow beam corresponds to one second geographic coverage area, and the second geographic coverage area corresponding to the at least one narrow beam does not overlap with each other;
collecting statistics on uplink signal power corresponding to each narrow beam; and
using, as a target interference area, the second geographic coverage area corresponding to a narrow beam for which the uplink signal power reaches a preset second threshold.

21. The method according to any one of claims 12 to 20, wherein the first information is radio resourcecontrol RRC information.

22. A communication apparatus, comprising a module or a unit configured to perform the method according to any one of claims 1 to 11, or a module or a unit configured to perform the method according to any one of claims 12 to 21.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 using a logic circuit or by executing code instructions, or the processor is configured to implement the method according to any one of claims 12 to 21 using a logic circuit or by executing code instructions.

24. A communication system, comprising a terminal device configured to perform the method according to any one of claims 1 to 11, and a network device configured to perform the method according to any one of claims 12 to 21.

25. A computer-readable storage medium, wherein the storage medium stores a computer program or instructions, and when the computer program or the instructions are executed by a communication apparatus, the method according to any one of claims 1 to 21 is implemented.

26. A computer program product, wherein the computer program product stores computer-readable instructions, and when the computer-readable instructions are run, the method according to any one of claims 1 to 21 is performed.

27. A chip, wherein the chip comprises at least one processor, and the processor is configured to perform the method according to any one of claims 1 to 21.
